# EUROPEAN PATENT APPLICATION

(11) **EP 4 564 659 A1**
(43) Date of publication of application: **04.06.2025**
(21) Application number: 23846161.0
(22) Date of filing: 05.07.2023
(51) Int. Cl.: H02M 7/48, H02P 27/08

(54) **POWER CONVERSION DEVICE**

(30) Priority: 29.07.2022 JP 2022122122
(71) Applicant: DENSO CORPORATION, Kariya-city, Aichi 448-8661 (JP)
(72) Inventor: ITO, Mitsutaka, Nisshin-city, Aichi 4700111 (JP); TANI, Keiya, Kariya- city, Aichi 4488661 (JP)
(74) Representative: TBK
(86) International application number: PCT/JP2023/024915
(87) International publication number: WO 2024/024428

(57) **Abstract**

A power conversion apparatus (11) that includes a rotary electric machine (40) and an inverter (30). The power conversion apparatus includes a connection switch (61a, 61b) mounted on a connection path (60), a control unit (70), a determining unit (73, 81), and a cutoff unit (86). The connection switch electrically connects between a neutral point of plural-phase windings connected in star configuration and each of a negative terminal of a first battery and a positive terminal of a second battery while turned on. The connection switch cuts off an electrical connection between the neutral point of the plural-phase windings and each of the negative terminal of the first battery and the positive terminal of the second battery while turned off. The control unit performs a switching control task of the upper- and lower-arm switches while the at least one connection switch is in an on state. The determining unit determines whether to execute a short-circuit control task that turns on one of the upper- and lower-arm switches of each switch unit and turns off the other of the upper- and lower-arm switches of the corresponding switch unit. The cutoff unit turns off the connection switch when the determining unit determines to execute the short-circuit control task.

## Description

### CROSS REFERENCE TO RELATED APPLICATION

This application is based on and claims the benefit of priority from Japanese Patent Application No. 2022-122122 filed on July 29, 2022, the disclosure of which is incorporated in its entirety herein by reference.

### TECHNICAL FIELD

The present disclosure relates to power conversion apparatuses.

### BACKGROUND

Known power conversion apparatuses include a rotary electric machine equipped with windings, and an inverter including one or more switch units each comprised of an upper-arm switch and a lower-arm switch connected in series thereto.

For example, patent literature 1 discloses a power conversion apparatus. The power conversion apparatus includes a first battery, a second battery, and a connection path connecting among the negative side of the first battery, the positive side of the second battery, and the neutral point of the windings. The power conversion apparatus includes a connection switch mounted on the connection path. The power conversion apparatus disclosed in patent literature 1 performs control of rising the temperature of each of the first and second batteries while the connection switch is in an on state.

### CROSS-REFERENCES

Patent Literature 1 Japanese Patent Application Publication No. 2021-93845

### SUMMARY

For example, if there is an anomaly in the power conversion apparatus with the connection switch being in the on state, the power conversion apparatus may perform short-circuit control that causes one of the upper- and lower-arm switches of any switch unit to be turned on while causing the other thereof to be turned off. Such short-circuit control aims to prevent the occurrence of an overvoltage anomaly that may occur due to an application of a back electromotive-force (emf) voltage, which is induced by rotation of the rotor of the rotary electric machine, to the first and second batteries.

Unfortunately, execution of the short-circuit control with the connection switch being in the on state may result in the back emf voltage induced in the windings of the rotary electric machine being applied to the first battery or the second battery through the connection switch. This may therefore result in reduction in the reliability of the first and second batteries.

From the above viewpoint, the present disclosure seeks to provide power conversion apparatuses, each of which is capable of preventing reduction in reliability of first and second batteries connected in series to each other.

The present disclosure provides a power conversion apparatus that includes a rotary electric machine comprised of plural-phase windings connected in star configuration and an inverter including plural switch units, each of which is comprised of an upper-arm switch and a lower-arm switch connected in series to each other. The power conversion apparatus includes a connection path that electrically connects between a neutral point of the plural-phase windings and each of (i) a negative terminal of a first battery connected in series to a second battery and (ii) a positive terminal of the second battery. The power conversion apparatus includes at least one connection switch mounted on the connection path. The at least one connection switch is configured to electrically connect between the neutral point of the plural-phase windings and each of the negative terminal of the first battery and the positive terminal of the second battery while turned on, and cut off an electrical connection between the neutral point of the plural-phase windings and each of the negative terminal of the first battery and the positive terminal of the second battery while turned off. The power conversion apparatus includes a control unit configured to perform at least one switching control task of the upper- and lower-arm switches while the at least one connection switch is in an on state. The power conversion apparatus includes a determining unit configured to determine whether to execute a short-circuit control task that turns on one of the upper- and lower-arm switches of each switch unit and turns off the other of the upper- and lower-arm switches of the corresponding switch unit. The power conversion apparatus includes a cutoff unit configured to turn off the at least one connection switch when the determining unit determines to execute the short-circuit control task.

The at least one switching control task of the of the upper- and lower-arm switches may be carried out while the at least one connection switch is in the on state. In this case, when it is determined that the short-circuit control task is carried out during execution of the at least one switching control task due to an anomaly in the power conversion apparatus, the short-circuit control task would be carried out while the at least one connection switch is in the on state.

From this viewpoint, the power conversion apparatus provided by the present disclosure turns off the at least one connection switch when the determining unit determines to execute the short-circuit control task.

This configuration prevents the short-circuit control task from being carried out while the at least one connection switch is in the on state, making it possible to prevent a back emf voltage included in each of the plural-phase windings from being applied to at least one of the first and second batteries. This therefore inhibits each of the first and second batteries from becoming in an overvoltage state, making it possible to avoid reduction in reliability of each of the first and second batteries.

### BRIEF DESCRIPTION OF THE DRAWINGS

Other aspects of the present disclosure will become apparent from the following description of embodiments with reference to the accompanying drawings in which:
Fig. 1 is a structural diagram of a power conversion system according to the first embodiment;
Fig. 2 is a flowchart illustrating a procedure of a switching control routine;
Fig. 3 is a diagram illustrating a control apparatus and its peripheral components;
Fig. 4 is a graphical timing chart illustrating how three-phase currents change according to a comparison example;
Fig. 5 is a diagram illustrating an example of a current path according to the comparison example;
Fig. 6 is a flowchart illustrating a procedure of a cutoff control routine;
Fig. 7 is a graphical timing chart illustrating how three-phase currents change according to the first embodiment;
Fig. 8 is a diagram illustrating an example of a current path according to the first embodiment;
Fig. 9 is a structural diagram of a power conversion system according to the second embodiment;
Figs. 10A to 10C are a joint timing chart illustrating a control example related to the power conversion apparatus before and after execution of a three-phase short-circuit control task;
Fig. 11 is a structural diagram of a power conversion system according to the third embodiment;
Fig. 12 is a flowchart illustrating a procedure of a switching control routine according to the third embodiment;
Fig. 13 is a flowchart illustrating a procedure of a switching control routine according to a modification of the third embodiment;
Fig. 14 is a diagram illustrating a control apparatus and its peripheral components according to the fourth embodiment;
Fig. 15 is a flowchart illustrating a procedure of a cutoff control routine carried out by a determining unit;
Fig. 16 is a diagram illustrating a current path and its peripheral components according to a modification;
Fig. 17 is a diagram illustrating a current path and its peripheral components according to another modification;
Fig. 18 is a diagram illustrating a current path and its peripheral components according to a further modification;
Fig. 19 is a diagram illustrating a current path and its peripheral components according to a still further modification;
Fig. 20 is a diagram illustrating a current path and its peripheral components according to a still further modification;
Fig. 21 is a diagram illustrating a current path and its peripheral components according to a still further modification;
Fig. 22 is a diagram illustrating a current path and its peripheral components according to a still further modification;
Fig. 23 is a diagram illustrating a current path and its peripheral components according to a still further modification;
Fig. 24 is a diagram illustrating a current path and its peripheral components according to a still further modification;
Fig. 25 is a diagram illustrating a current path and its peripheral components according to a still further modification;
Fig. 26 is a diagram illustrating a current path and its peripheral components according to a still further modification; and
Fig. 27 is a diagram illustrating a current path and its peripheral components according to a still further modification.

### DETAILED DESCRIPTION OF EMBODIMENTS

### First embodiment

The following describes the first embodiment, which is created by implementing one of power conversion apparatuses according to the present disclosure, with reference to the accompanying drawings.

A power conversion system 10 according to the first embodiment is installed in, for example, an electric vehicle or a hybrid vehicle.

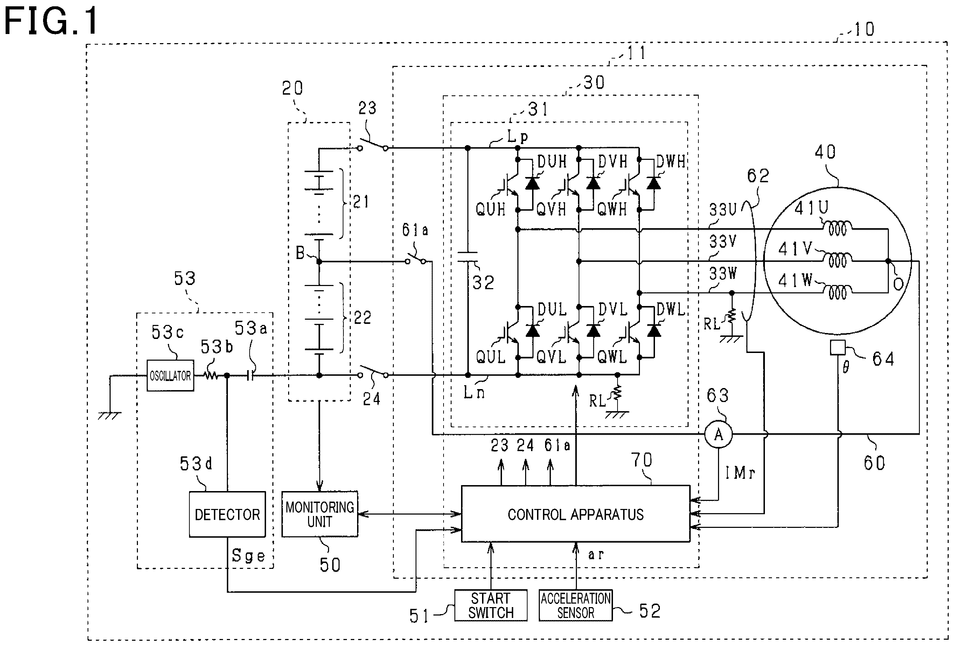

Referring to Fig. 1, the power conversion system 10 includes a power conversion apparatus 11 and a battery pack 20. The battery pack 20 is configured as a series module comprised of a plurality of battery cells, i.e., unit cells, connected in series to each other. The battery pack 20 has a terminal voltage thereacross of, for example, several hundred volts. The terminal voltage, for example, the rated voltage, across each battery cell is set to a predetermined constant value. For example, a secondary battery cell, such as a lithium-ion cell, can be used as each battery cell. The battery pack 20 is for example located outside the power conversion apparatus 11.

The power conversion apparatus 11 includes an inverter 30 and a rotary electric machine 40. The rotary electric machine 40 is configured as a three-phase synchronous machine, more specifically a three-phase permanent magnet synchronous machine. The rotary electric machine 40 includes three-phase (UVW-phase) windings 41U, 41V, and 41W serving as stator windings and connected in star configuration. The UVW-phase windings 41U, 41V, and 41W are arranged to have a phase difference of 120 electrical degrees from each other. The rotary electric machine 40 according to the first embodiment serves as a main engine for propelling the vehicle.

The inverter 30 includes a switching device unit 31. The switching device unit 31 includes three-phase (UVW-phase) series-connected switch units for the respective three-phases of the rotary electric machine 31. The series-connected switch unit for the U-phase is comprised of an upper-arm switch QUH and a lower-arm switch QUL connected in series to each other. The series-connected switch unit for the V-phase is comprised of an upper-arm switch QVH and a lower-arm switch QVL connected in series to each other. The series-connected switch unit for the W-phase is comprised of an upper-arm switch QWH and a lower-arm switch QWL connected in series to each other. The first embodiment uses, as each of the upper- and lower-arm switches, an Insulated Gate Bipolar Transistor (IGBT) as an example of a voltage-controlled semiconductor switch. For this reason, each of the switches QUH, QVH, QWH, QUL, QVL, and QWL has a collector serving as a high-side terminal, and an emitter serving as a low-side terminal. Freewheel diodes DUH, DVH, DWH, DUL, DVL, and DWL are connected in antiparallel to the respective switches QUH, QVH, QWH, QUL, QVL, and QWL.

The emitter of the U-phase upper-arm switch QUH and the collector of the U-phase lower-arm switch QUL are connected to a first end of the U-phase winding 41U through a U-phase conductor, such as a busbar, 33U. The emitter of the U-phase upper-arm switch QUH and the collector of the U-phase lower-arm switch QUL are connected to a first end of the U-phase winding 41U through a U-phase conductor, such as a busbar, 33U. The emitter of the V-phase upper-arm switch QVH and the collector of the V-phase lower-arm switch QVL are connected to a first end of the V-phase winding 41V through a V-phase conductor, such as a busbar, 33V. The emitter of the W-phase upper-arm switch QWH and the collector of the W-phase lower-arm switch QWL are connected to a first end of the W-phase winding 41W through a W-phase conductor, such as a busbar, 33W.

Opposite second ends of the three-phase windings 41U, 41V, and 41W are connected to a neutral point O.

The number of turns of each phase winding 41U, 41V, and 41W is set to a predetermined constant value, so that the inductance of each of the phase winding 41U, 41V, and 41W is set to a predetermined constant value.

The collector of each-phase upper-arm switch QUH, QVH, QVW and the positive terminal of the battery pack 20 are connected to one another through a positive busbar Lp. The emitter of each-phase lower-arm switch QUL, QVL, QVL and the negative terminal of the battery pack 20 are connected to one another through a negative busbar Ln.

A positive-side cutoff switch 23 is mounted on the positive busbar Lp, and a negative-side cutoff switch 24 is mounted on the negative busbar Ln. A mechanical relay or a semiconductor switch can be used as each of the cutoff switches 23 and 24.

A control apparatus 70 of the first embodiment is configured to turn on or off each of the cutoff switches 23 and 24 depending on whether the power conversion system 10 is operating. For example, the control apparatus 50 is configured such that a signal indicative of a start switch 51 being turned on or off. An ignition switch or a push start switch scan be used as the start switch 51. The start switch 51 can be operable by a user of the vehicle. The control apparatus 70 is configured to turn on the cutoff switches 23 and 24 to accordingly activate the power conversion system 10 in response to a user's turning on of the start switch 51. In contrast, the control apparatus 70 is configured to turn off the cutoff switches 23 and 24 to accordingly deactivate the power conversion system 10 in response to a user's turning off of the start switch 51. Each of the cutoff switches 23 and 24 can be configured to be turned on or off by a higher-level control apparatus than the control apparatus 70.

The power conversion apparatus 11 includes a smoothing capacitor 32 connected between the positive and negative busbars Lp and Ln. The smoothing capacitor 32 can be installed in the inverter 30 or provided outside the inverter 30.

The battery cells of the battery pack 20 include series-connected high-side battery cells, which constitute a first battery 21, and series-connected low-side battery cells, which constitute a second battery 22. That is, the battery pack 20 is divided into two blocks of the first and second batteries 21 and 22. The negative terminal of the first battery 21 is connected to the positive terminal of the second battery 22, the connection point between the negative terminal of the first battery 21 and the positive terminal of the second battery 22 serves as an intermediate terminal B. In the first embodiment, the number of high-side battery cells constituting the first battery 21 is set to be identical to the number of low-side battery cells constituting the second battery 22. For this reason, the terminal voltage, for example, the rated voltage, across the first battery 21 is set to be the same as the terminal voltage, for example, the rated voltage, across the second battery 22.

The power conversion apparatus 11 includes a monitoring unit 50. The monitoring unit 50 is configured to monitor a voltage across each battery cell of the battery pack 20 and a temperature of each battery cell of the battery pack 20 to accordingly monitor the conditions of the battery pack 20. The monitoring unit 50 of the first embodiment is configured to be communicable with the control apparatus 70 of the power conversion apparatus 11. Specifically, the monitoring unit 50 is configured to monitor a terminal voltage *VB* across the battery pack 20, a terminal voltage *VH* across the first battery 21, and a terminal voltage *VL* across the second battery 22, and output the measured terminal voltages *VB, VH,* and *VL* to the control apparatus 70, so that the control apparatus 70 receives the measured terminal voltages *VB, VH,* and *VL.*

The power conversion apparatus 11 includes a connection path 60 and a connection switch 61a. The connection path 60 electrically connects between the intermediate terminal B of the battery pack 20 and the neutral point O. The connection switch 61a is mounted on the connection path 60, and configured to enable a current flowing through the connection path 60 to pass therethrough or cut off the current. The first embodiment uses a mechanical relay as the connection switch 61a.

The connection switch 61a is configured to electrically connect between the intermediate terminal B and the neutral point O while turned on. In contrast, the connection switch 61a is configured to cut off the electrical connection between the intermediate terminal B and the neutral point O while turned off. The control apparatus 70 is configured to control the connection switch 61a to be turned on or off.

The power conversion apparatus 11 includes one or more phase current sensors 62, a neutral point current sensor 63, and an angle sensor 64.

The one or more current sensors 62 are configured to measure three-phase currents *Iu, Iv,* and *Iw* flowing through the respective phase conductors 33U, 33V, and 33W. The neutral point current sensor 63 is configured to measure a neutral point current *IMr* flowing through the neutral point O. The angular sensor 64 is comprised of, for example, a resolver, and is configured to measure a rotational angle, such as a rotational electric angle, *θ* of the rotor of the rotary electric machine 40.

The measurements *Iu, Iv, Iw, IMr,* and *θ* of the one or more phase current sensors 62, the neutral point current sensor 63, and the angle sensor 64 are inputted to the control apparatus 70.

The power conversion system 10 includes an acceleration sensor 52 and a ground-fault detecting device 53. The acceleration sensor 52 is configured to measure acceleration *ar* of the vehicle, and output the measured acceleration *ar* to the control apparatus 70.

The ground-fault detection device 53 includes a coupling capacitor 53a, a resistor 53b, an oscillator 53c, and a detector 53d, and is configured to detect a ground fault of a high-voltage circuit including the battery pack 20, the inverter 30, and the rotary electric machine 40. For example, each of (i) an insulation condition between the negative busbar Ln of the inverter 30 and the ground and (ii) an insulation condition between the W-phase conductor 33W and the ground is represented as an insulation resistor RL. A current flow through one of the insulation resistors RL between the high-voltage circuit and the ground may cause the ground fault of the high-voltage circuit. The ground is, for example, the metallic body frame of the vehicle serving as a body earth or a body ground.

A first side of the coupling capacitor 53a is connected to the negative terminal of the second battery 22, an opposite second side of the coupling capacitor 53a is connected to a first end of the resistor 53b in series, and the other second end of the resistor 53b is connected to the oscillator 53c in series. The coupling capacitor 53a is configured to cut off direct-current (DC) components. The detector 53d is connected to a connection point between the coupling capacitor 53a and the resistor 53b.

The ground-fault detection device 53 is configured to perform ground-fault detection operations of the high-voltage circuit while the vehicle is stopped. In the ground-fault detection operations, the oscillator 53c generates a pulse voltage, i.e., an alternating-current (AC) voltage, with a predetermined frequency, and applies the pulse voltage with the predetermined frequency to the resistor 53b. The detector 53d detects a voltage to the ground at the connection point between the coupling capacitor 53a and the resistor 53b. The voltage to the ground, which will be referred to as a ground voltage, at the connection point between the coupling capacitor 53a and the resistor 53b represents a voltage obtained by distributing the AC voltage applied to the resistor 53b between a resistance of the resistor 53b and the insulation resistor *RL.* The detector 53d is configured to determine whether there is a ground fault of the high-voltage circuit in accordance with the detected ground voltage. The ground-fault detection device 53 can be configured to perform the ground-fault detection operations of the high-voltage circuit while the vehicle is traveling.

When the ground-fault detection device 53 executes the ground-fault detection operations, the detector 53d outputs a signal *Sge* indicative of the start of executing the ground-fault detection operations to the control apparatus 70.

The control apparatus 70 includes a storage device in which one or more programs are stored. The control apparatus 70 is configured to execute the one or more programs stored in the storage device to thereby implement various control functions. The various control functions can be implemented by one or more hardware electronic circuits or by the combination of one or more hardware devices and software.

The following describes switching control tasks for the switches QUH to QWL constituting the inverter 30. The switching control tasks include a motor drive control task, a temperature-rise control task, and a temperature-rise/motor-drive control task.

The control apparatus 70 is configured to perform the motor drive control task included in the switching control tasks; the motor drive control task alternately turns on the upper- and lower-arm switches for each phase to accordingly controls a controlled variable, such as torque, of the rotary electric machine 40 to be fed back to a target value for the controlled variable.

The control apparatus 70 is configured to perform the temperature-rise control task included in the switching control tasks for raising the temperature of the battery pack 20. Specifically, the temperature-rise control task performs on-off switching operations of each of the switches QUH to QWL with the connection switch 61a being in an on state to accordingly cause an alternating current to flow between the first battery 21 and the second battery 22 through the switching device unit 31, the phase windings 41U, 41V, and 41W, and the connection path 60. This enables power to be transferred between the first and second batteries 21 and 22, resulting in the transferred power being converted into thermal energy in each of the first and second batteries 21 and 22. The thermal energy results in the temperature of the battery pack 20 rising.

The control apparatus 70 is configured to perform the temperature-rise/motor-drive control task included in the switching control tasks. The temperature-rise/motor-drive control task controls the controlled variable of the rotary electric machine 40 to be fed back to a target value for the controlled variable while raising the temperature of the battery pack 20. That is, the temperature-rise/motor-drive control task is programmed to perform the motor drive control task while performing the temperature-rise control task.

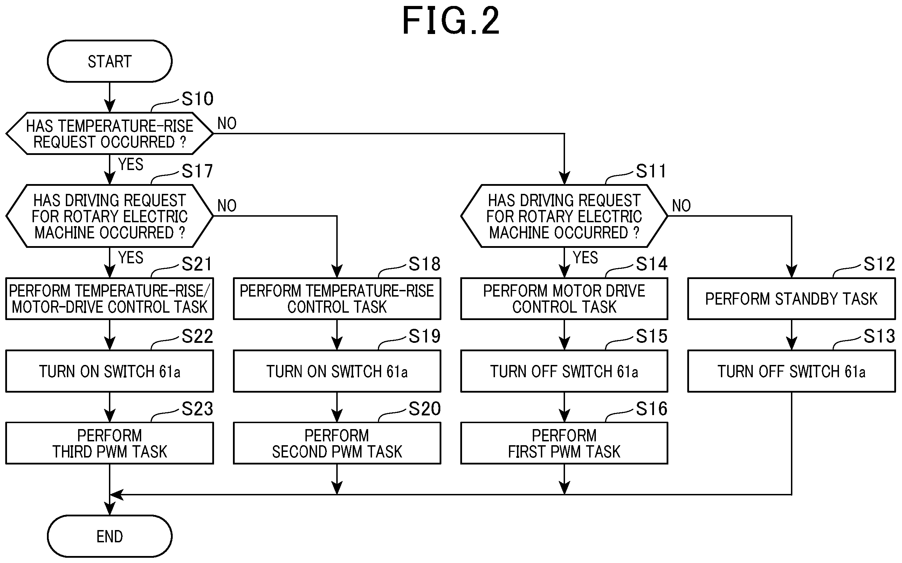

The following describes operations of a switching control routine carried out by the control apparatus 70 with reference to Fig. 2. The control apparatus 70 is for example programmed to execute the switching control routine every predetermined control cycle.

The control apparatus 70 determines whether a temperature-rise request for raising the temperature of the first and second batteries 21 and 22 has occurred in step S10. The control apparatus 70 of the first embodiment determines whether the temperature of the battery pack 20 is smaller than or equal to a predetermined target temperature, and determines that the temperature-rise request for the first and second batteries 21 and 22 has occurred upon determination that the temperature of the battery pack 20 is smaller than or equal to the predetermined target temperature. The control apparatus 70 acquires the temperature of the battery pack 20 from the monitoring unit 50. As the temperature of the battery pack 20, the temperature of the first battery 21, the temperature of the second battery 22, or the average of the temperatures of the first and second batteries 21 and 22 can be used.

Upon determination that no temperature-rise request for the first and second batteries 21 and 22 has occurred (NO in step S10), the control apparatus 70 determines whether a driving request for the rotary electric machine 40 has occurred in step S11. The driving request for the rotary electric machine is a request for rotatably driving the rotor of the rotary electric machine 40. The control apparatus 70 can determine whether the driving request for the rotary electric machine 40 has occurred in accordance with requested target torque sent thereto from the higher-level control apparatus.

Upon determination that no driving request for the rotary electric machine 40 has occurred (NO in step S11), the control apparatus 70 performs a standby task in step S12. The standby task turns off each switch QUH to QWL of the inverter 30. Then, the control apparatus 70 turns off the connection switch 61a in step S13, thus cutting off electrical connection between the intermediate terminal B and the neutral point O.

Otherwise, upon determination that the driving request for the rotary electric machine 40 has occurred (YES in step S11), the control apparatus 70 performs the motor drive control task in step S14, and turns off the connection switch 61a in step S15, thus cutting off the electrical connection between the intermediate terminal B and the neutral point O.

Then, the control apparatus 70 performs a first PWM (pulse width modulation) task of the motor drive control task in step S16. The first PWM task of the motor drive control task calculates a modulation factor for each U-, V-, and W-phase in accordance with the requested target torque for the rotary electric machine 40 sent from the higher-level control apparatus. Then, the first PWM task of the motor drive control task compares, in magnitude, the modulation factor for each U-, V-, and W-phase with a carrier signal, such as a triangular carrier signal, to accordingly generate switching commands for the respective switches QUH to QWL.

Specifically, the first PWM task acquires the requested target torque for the rotary electric machine 40 from the higher-level control apparatus. Next, the first PWM task determines, based on the requested target torque, a d-axis command current and a q-axis command current, and acquires the measured phase currents *Iu, Iv, Iw* from the one or more phase current sensors 62, and the measured rotational angle *θ* of the rotor of the rotary electric machine 40 from the angular sensor 64. The first PWM task calculates, based on the measured phase currents *Iu, Iv, Iw* and the measured rotational angle *θ*, actual d- and q-axis currents.

Next, the first PWM task calculates a d-axis command voltage as a manipulated variable for feedback control, such as PID (Proportional-Integral-Derivative) control, of keeping the actual d-axis current close to the d-axis command current, and calculates a q-axis command voltage as a manipulated variable for feedback control of keeping the actual q-axis current close to the q-axis command current.

The first PWM task converts, based on the rotational angle *θ*, the d- and q-axis command voltages into U-, V-, and W-phase command voltages in a three-phase stationary coordinate system; the U-, V-, and W-phase command voltages respectively have waveforms that have a phase difference of 120 electrical degrees from each other.

Then, the first PWM task adds, to the U-phase command voltage, an offset correction to accordingly calculate a final U-phase command voltage. The offset correction represents a correction voltage to be added to the U-phase command voltage for execution of the temperature-rise control task. That is, the offset correction is set to 0 for execution of the motor drive control task. Like the final U-phase command voltage, the first PWM task adds, to the V-phase command voltage, the offset correction to accordingly calculate a final V-phase command voltage, and adds, to the W-phase command voltage, the offset correction to accordingly calculate a final W-phase command voltage. How to calculate the offset correction will be described later.

Then, the first PWM task divides each of the final U-, V-, and W-phase command voltages by a power supply voltage to accordingly calculate a corresponding one of the U-, V-, and W-phase modulation factors. The power supply voltage is, for example, half of the terminal voltage VB across the battery pack 20 as the total voltage of the battery cells of the battery pack 20.

Otherwise, upon determination that the temperature-rise request for the first and second batteries 21 and 22 has occurred (YES in step S10), the control apparatus 70 determines whether the driving request for the rotary electric machine 40 has occurred in step S17, which is identical to the determination in step S11.

Upon determination that no driving request for the rotary electric machine 40 has occurred (NO in step S17), the control apparatus 70 performs the temperature-rise control task in step S18. The temperature-rise control task turns on the connection switch 61a in step S19, thus enabling electrical connection between the intermediate terminal B and the neutral point O through the connection path 60.

Next, the control apparatus 70 performs a second PWM task of the temperature-rise control task in step S20. The second PWM task of the temperature-rise control task calculates the modulation factor for each U-, V-, and W-phase in accordance with the target temperature of the battery pack 20.

Specifically, the second PWM task receives the target temperature of the battery pack 20 from the higher-level control apparatus. Next, the second PWM task determines, based on the target temperature, a neutral-point command current with, for example, a sinusoidal waveform. The second PWM task can be configured to increase the amplitude of the neutral-point command current as the difference between the target temperature of the battery pack 20 and the actual temperature of the battery pack 20 increases.

Next, the second PWM task acquires the measured neutral point current *IMr* from the neutral-point current sensor 63. Then, the second PWM task calculates an offset correction as a manipulated variable for feedback control, such as PID control, of keeping the neutral point current *IMr* measured by the neutral-point current sensor 63 close to the neutral-point command current.

The second PWM task calculates the U-, V-, and W-phase modulation factors in the same manner as that of the first PWM task except for the following point. Specifically, because the U-, V-, and W-phase command voltages are set to 0 for the temperature-rise control task, the second PWM task determines the offset correction as each of the final U-, V-, and W-phase command voltages. Then, the second PWM task divides each of the final U-, V-, and W-phase command voltages by the power supply voltage to accordingly calculate a corresponding one of the U-, V-, and W-phase modulation factors.

Otherwise, upon determination that the driving request for the rotary electric machine 40 has occurred (YES in step S17), the control apparatus 70 performs the temperature-rise/motor-drive control task in step S21. Next, the control apparatus 70 turns on the connection switch 61a in step S22.

In step S23, the control apparatus 70 calculates a third PWM task.

The third PWM task calculates the modulation factor for each U-, V-, and W-phase in accordance with the requested target torque for the rotary electric machine 40 and the target temperature of the battery pack 20.

Specifically, the third PWM task adds, to the U-phase command voltage, the offset correction to accordingly calculate a final U-phase command voltage, adds, to the V-phase command voltage, the offset correction to accordingly calculate a final V-phase command voltage, and adds, to the W-phase command voltage, the offset correction to accordingly calculate a final W-phase command voltage.

Then, the third PWM task divides each of the final U-, V-, and W-phase command voltages by the power supply voltage to accordingly calculate a corresponding one of the U-, V-, and W-phase modulation factors. The method of calculating the U-, V-, and W-phase command voltages according to the third PWM task is identical to that according to the first PWM task, and the method of calculating the offset command according to the third PWM task is identical to that according to the second PWM task.

Next, the following describes a three-phase short-circuit control task carried out by the control apparatus 70.

The three-phase short-circuit control task is configured to turn on one of (i) all the upper-arm switches QUH to QWH and (ii) all the lower-arm switches QUL to QWL and turn off the other thereof. The three-phase short-circuit control task is performed to prevent a back emf voltage, which is induced in each of the three-phase windings 41U, 41V, and 41W due to rotation of the rotor of the rotary electric machine 40, from being applied to the battery pack 20 and the smoothing capacitor 32. The control apparatus 70 of the first embodiment is configured to perform, as the three-phase short-circuit control task, a task of turning off all the lower-arm switches QUL to QWL and turning on all the lower-arm switches QUL to QWL.

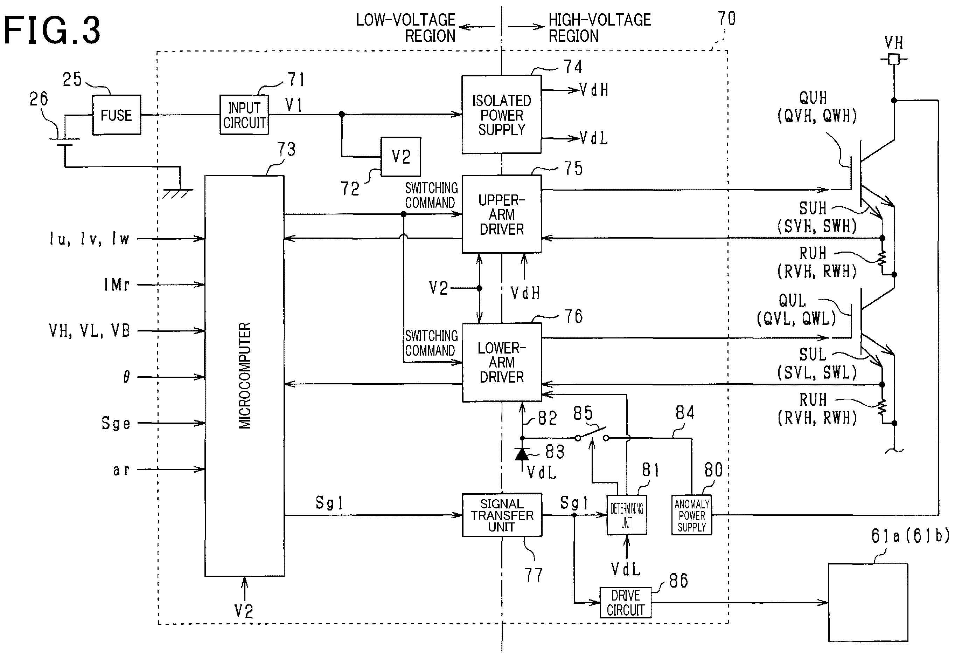

Next, the following describes a configuration of the control apparatus 70, which implements the three-phase short-circuit control task with reference to Fig. 3.

The control apparatus 70 includes an input circuit 71 and a power supply circuit 72. The input circuit 71 and the power supply circuit 72 are provided in a low-voltage region of the control apparatus 70. The positive terminal of the low-voltage power source 26 is connected to the input circuit 71 through a fuse 25. The negative terminal of the low-voltage power source 26 is connected to the ground serving as a ground portion. The low-voltage power source 26 is a secondary battery, such as a lead-acid storage battery. The output voltage, i.e., rated voltage, of the low-voltage power source 26 is set to be lower than the output voltage, i.e., rated voltage, of the battery pack 20. For example, the output voltage of the low-voltage power source 26 is set to 12 V. The power supply circuit 72 is configured to generate, based on a first voltage *V1* supplied from the input circuit 71, a second voltage *V2.* For example, the power supply circuit 72 is configured to step down the first voltage *V1* supplied from the input circuit 71 to accordingly generate the second voltage *V2* of, for example, 5 V.

The control apparatus 70 includes a microcomputer 73 that includes a CPU and peripheral circuits of the CPU. The peripheral circuits include an input/output (I/O) unit that enables the CPU to communicate with one or more other devices. To the microcomputer 73, the terminal voltages *VB, VH,* and *VL* monitored by the monitoring unit 50, the acceleration ar measured by the acceleration sensor 52, the phase currents *Iu, Iv, Iw* measured by the one or more phase current sensors 62, the neutral point current *IMr* measured by the neutral-point current sensor 63, and the rotational angle *θ* measured by the angular sensor 64 are inputted. Additionally, to the microcomputer 73, a signal notifying a turn-on or turnoff of the start switch 51 and the signal *Sge* indicative of the start of executing the ground-fault detection operations are inputted.

The microcomputer 73 is configured to perform a fourth PWM task, which is similar to the first to third PWM tasks described above, to generate switching commands that alternately turn on the upper- and lower-arm switches for each phase. The input circuit 71, the power supply circuit 72, and the microcomputer 73 are provided in the low-voltage region of the control apparatus 70.

The control apparatus 70 includes an isolated power supply 74, upper-arm drivers 75, and a lower-arm driver 76. Each of the isolated power supply 74, three-phase upper-arm drivers 75, and three-phase lower-arm drivers 76 is provided in both the low- and high-voltage regions of the control apparatus 70 while straddling the boundary between the low-and high-voltage regions that are electrically isolated from each other.

For example, the isolated power supply 74 includes upper-arm isolated power supply units provided independently for the three-phase upper-arm drivers 75, and a common lower-arm isolated power supply unit provided commonly for the three-phase lower-arm drivers 76. The isolated power supply 74 can include lower-arm isolated power supply units provided independently for the three-phase lower-arm drivers 76.

The isolated power supply 74 is configured to generate, based on the first voltage *V1* supplied thereto from the input circuit 71, an upper-arm drive voltage *VdH* to be supplied to each of the upper-arm drivers 75 and a lower-arm drive voltage *VdL* to be supplied to each of the lower-arm drivers 76, and output the upper- and lower-arm drive voltages *VdH* and *VdL* to the high-voltage region. The isolated power supply 74 is, for example, configured as a flyback isolated power supply.

The three-phase upper-arm drivers 75 are independently provided for the respective three-phase upper-arm switches QUH, QVH, and QWH. Each upper-arm driver 75 includes an upper-arm driving unit and an upper-arm isolation transfer unit. The upper-arm driving unit of each upper-arm driver 75 is provided in the high-voltage region, and the upper-arm isolation transfer unit is provided in both the low- and high-voltage regions of the control apparatus 70 while straddling the boundary between the low-and high-voltage regions. The upper-arm isolation transfer unit of each upper-arm driver 75 is configured to transfer the corresponding switching command outputted from the microcomputer 73 to the upper-arm driving unit while electrically isolating between the low- and high-voltage regions. The upper-arm isolation transfer unit of each upper-arm driver 75 is, for example, a photocoupler or a magnetic coupler.

The upper-arm driving unit of each upper-arm driver 75 is configured to be able to operate based on the upper-arm drive voltage VdH of the isolated power supply 74 being supplied thereto. Similarly, one or more portions of the upper-arm isolation transfer unit of each upper-arm driver 75, which are provided in the high-voltage region, are configured to be able to operate based on the upper-arm drive voltage VdH of the isolated power supply 74 being supplied thereto. One or more portions of the upper-arm isolation transfer unit of each upper-arm driver 75, which are provided in the low-voltage region, are configured to be able to operate based on the second voltage V2 of the power supply circuit 72 being supplied thereto.

The upper-arm driving unit of each upper-arm driver 75 is configured to supply a charging current to the gate of the corresponding upper-arm switch QUH, QVH, QWH when the switching command for the corresponding upper-arm switch QUH, QVH, QWH inputted thereto through the corresponding upper-arm isolation transfer unit is an on command. This enables a voltage at the gate of each upper-arm switch QUH, QVH, QWH to become higher than or equal to a threshold voltage Vth thereof, resulting in each upper-arm switch QUH, QVH, QWH being turned on.

In contrast, the upper-arm driving unit of each upper-arm driver 75 is configured to cause a discharging current to flow from the gate of the corresponding upper-arm switch QUH, QVH, QWH to the emitter thereof when the switching command for the corresponding upper-arm switch QUH, QVH, QWH inputted thereto is an off command. This enables the voltage at the gate of each upper-arm switch QUH, QVH, QWH to become lower than the threshold voltage Vth thereof, resulting in each upper-arm switch QUH, QVH, QWH being turned off.

Each upper-arm switch QUH, QVH, QWH has an upper-arm sense terminal SUH, SVH, SWH. Through the sense terminal SUH, SVH, SWH of each upper-arm switch QUH, QVH, QWH, a minute current flows; the minute current has a correlation with a collector current flowing through the collector of the corresponding upper-arm switch QUH, QVH, QWH. The minute current flowing through the sense terminal SUH, SVH, SWH of each upper-arm switch QUH, QVH, QWH flows through a corresponding upper-arm resistor RUH, RVH, RWH connected to the sense terminal SUH, SVH, SWH, so that the minute current flowing through the sense terminal SUH, SVH, SWH of each upper-arm switch QUH, QVH, QWH is measured as a voltage difference across the corresponding upper-arm resistor RUH, RVH, RWH. The voltage difference across each upper-arm resistor RUH, RVH, RWH, which will be referred to as an upper-arm sense voltage, is inputted to the corresponding upper-arm driver 75, and thereafter inputted to the microcomputer 73 through the corresponding upper-arm driver 75.

The three-phase lower-arm drivers 76 are independently provided for the respective three-phase lower-arm switches QUL, QVL, and QWL. Each lower-arm driver 76 includes a lower-arm driving unit and a lower-arm isolation transfer unit. The lower-arm driving unit of each lower-arm driver 76 is provided in the high-voltage region, and the lower-arm isolation transfer unit is provided in both the low- and high-voltage regions of the control apparatus 70 while straddling the boundary between the low-and high-voltage regions. The lower-arm isolation transfer unit of each lower-arm driver 76 is configured to transfer the corresponding switching command outputted from the microcomputer 73 to the lower-arm driving unit while electrically isolating between the low- and high-voltage regions. The lower-arm isolation transfer unit of each lower-arm driver 76 is, for example, a photocoupler or a magnetic coupler.

The lower-arm driving unit of each lower-arm driver 76 is configured to be able to operate based on the lower-arm drive voltage *VdL* of the isolated power supply 74 being supplied thereto. Similarly, one or more portions of the lower-arm isolation transfer unit of each lower-arm driver 76, which are provided in the high-voltage region, are configured to be able to operate based on the lower-arm drive voltage *VdL* of the isolated power supply 74 being supplied thereto. One or more portions of the lower-arm isolation transfer unit of each lower-arm driver 76, which are provided in the low-voltage region, are configured to be able to operate based on the second voltage *V2* of the power supply circuit 72 being supplied thereto.

The lower-arm driving unit of each lower-arm driver 76 is configured to supply a charging current to the gate of the corresponding lower-arm switch QUL, QVL, QWL when the switching command for the corresponding lower-arm switch QUL, QVL, QWL inputted thereto through the corresponding lower-arm isolation transfer unit is the on command. This enables a voltage at the gate of each lower-arm switch QUL, QVL, QWL to become higher than or equal to the threshold voltage Vth thereof, resulting in each lower-arm switch QUL, QVL, QWL being turned on.

In contrast, the lower-arm driving unit of each lower-arm driver 76 is configured to cause a discharging current to flow from the gate of the corresponding lower-arm switch QUL, QVL, QWL to the emitter thereof when the switching command for the corresponding lower-arm switch QUL, QVL, QWL inputted thereto is the off command. This enables the voltage at the gate of each lower-arm switch QUL, QVL, QWL to become lower than the threshold voltage Vth thereof, resulting in each lower-arm switch QUL, QVL, QWL being turned off.

Each lower-arm switch QUL, QVL, QWL has a lower-arm sense terminal SUL, SVL, SWL. Through the sense terminal SUL, SVL, SWL of each lower-arm switch QUL, QVL, QWL, a minute current flows; the minute current has a correlation with a collector current flowing through the collector of the corresponding lower-arm switch QUL, QVL, QWL. The minute current flowing through the sense terminal SUL, SVL, SWL of each lower-arm switch QUL, QVL, QWL flows through a corresponding lower-arm resistor RUL, RVL, RWL connected to the sense terminal SUL, SVL, SWL, so that the minute current flowing through the sense terminal SUL, SVL, SWL of each lower-arm switch QUL, QVL, QWL is measured as a voltage difference across the corresponding lower-arm resistor RUL, RVL, RWL. The voltage difference across each lower-arm resistor RUL, RVL, RWL, which will be referred to as a lower-arm sense voltage, is inputted to the corresponding lower-arm driver 76, and thereafter inputted to the microcomputer 73 through the corresponding lower-arm driver 76.

The control apparatus 70 includes a signal transfer unit 77 and a determining unit 81. The signal transfer unit 77 is provided in both the low- and high-voltage regions of the control apparatus 70 while straddling the boundary between the low-and high-voltage regions. The signal transfer unit 77 is configured to transfer a short-circuit request signal *Sg1* outputted from the microcomputer 73 to the determining unit 81 while electrically isolating between the low- and high- voltage regions.

The short-circuit request signal *Sg1* is a signal indicative of whether a request for executing the three-phase short-circuit control task has occurred. Specifically, the short-circuit request signal *Sg1,* which has a logical low level, represents that no request for executing the three-phase short-circuit control task has occurred. In contrast, the short-circuit request signal *Sg1,* which has a logical high level, represents that the request for executing the three-phase short-circuit control task has occurred.

The microcomputer 73 determines whether the request for executing the three-phase short-circuit control task has occurred. Specifically, the microcomputer 73 determines whether at least one of the following first to third conditions is satisfied:
The first condition is that there are one or more anomalies in the power conversion system 10.
The second condition is that the vehicle is being towed by another vehicle.
The third condition is that the microcomputer 73 determines receipt of the signal Sge indicative of the start of executing the ground-fault detection operations.

Then, when determining that the request for executing the three-phase short-circuit control task has occurred in response to determination that at least one of the first to third conditions is satisfied, the microcomputer 73 outputs the short-circuit request signal *Sg1* having the logical high level to the signal transfer unit 77. Otherwise, when determining that no request for executing the three-phase short-circuit control task has occurred in response to determination that all the first to third conditions are not satisfied, the microcomputer 73 outputs the short-circuit request signal *Sg1* having the logical low level to the signal transfer unit 77. The microcomputer 73 serves as a determiner according to the first embodiment.

The reason why the microcomputer 73 determines that the request for executing the three-phase short-circuit control task has occurred in response to determination that the vehicle is being towed by another vehicle is that rotation of the rotor of the rotary electric machine 40 due to the vehicle being towed may cause a back emf voltage induced in each of the three-phase windings 41U, 41V, and 41W to increase.

The reason why the microcomputer 73 determines that the request for executing the three-phase short-circuit control task has occurred when the microcomputer 73 determines receipt of the signal Sge indicative of the start of executing the ground-fault detection operations is to execute the ground-fault detection operations appropriately. Specifically, execution of the three-phase short-circuit control task turns on all the lower-arm switches QUL to QWL, resulting in the ground-fault detection device 53 and the rotary electric machine 40 being electrically connected. This enables, during execution of the ground-fault detection operations, there is a ground fault in the rotary electric machine 40 located at the output side of the inverter 30 to be detected.

The anomalies in the power conversion system 10 include anomalies in the power conversion apparatus 11, anomalies in the battery pack 20, and an open fault of each of the cutoff switches 23 and 24. For example, the microcomputer 73 can be configured to determine that the open fault has occurred in each of the cutoff switches 23 and 24 in response to determination that the corresponding one of the cutoff switches 23 and 24 is in the off state while the start switch 51 is in the on state.

The anomalies in the battery pack 20 include a situation where an overvoltage fault or an abnormal low-voltage fault has occurred in at least one of the battery pack 20, the first battery 21, and the second battery 22. The microcomputer 73 can be configured to determine whether one or more anomalies have occurred in the battery pack 20 in accordance with the terminal voltages *VB, VH,* and *VL* monitored by the monitoring unit 50.

Specifically, the microcomputer 73 can be configured to determine whether the terminal voltage *VB* across the battery pack 20 has exceeded an upper limit voltage of a usable voltage range of the battery pack 20, and determine that the overvoltage fault in the battery pack 20 has occurred upon determination that the terminal voltage *VB* across the battery pack 20 has exceeded the upper limit voltage of the usable voltage range of the battery pack 20. Additionally, the microcomputer 73 can be configured to determine whether the terminal voltage *VB* across the battery pack 20 has fallen below a lower limit voltage of the usable voltage range of the battery pack 20, and determine that the abnormal low-voltage fault has occurred in the battery pack 20 upon determination that the terminal voltage *VB* across the battery pack 20 has fallen below the lower limit voltage of the usable voltage range of the battery pack 20.

Similarly, the microcomputer 73 can be configured to determine whether the terminal voltage *VH* across the first battery 21 has exceeded an upper limit voltage of a usable voltage range of the first battery 21, and determine that the overvoltage fault in the first battery 21 has occurred upon determination that the terminal voltage *VH* across the first battery 21 has exceeded the upper limit voltage of the usable voltage range of the first battery 21. Additionally, the microcomputer 73 can be configured to determine whether the terminal voltage *VH* across the first battery 21 has fallen below a lower limit voltage of the usable voltage range of the first battery 21, and determine that the abnormal low-voltage fault has occurred in the first battery 21 upon determination that the terminal voltage *VH* across the first battery 21 has fallen below the lower limit voltage of the usable voltage range of the first battery 21.

The microcomputer 73 can be configured to determine whether the terminal voltage VL across the second battery 22 has exceeded an upper limit voltage of a usable voltage range of the second battery 22, and determine that the overvoltage fault in the second battery 22 has occurred upon determination that the terminal voltage *VL* across the second battery 22 has exceeded the upper limit voltage of the usable voltage range of the second battery 22. Additionally, the microcomputer 73 can be configured to determine whether the terminal voltage *VL* across the second battery 22 has fallen below a lower limit voltage of the usable voltage range of the second battery 22, and determine that the abnormal low-voltage fault has occurred in the second battery 22 upon determination that the terminal voltage *VL* across the second battery 22 has fallen below the lower limit voltage of the usable voltage range of the second battery 22.

The anomalies in the power conversion apparatus 11 include anomalies in the inverter 30, anomalies in the rotary electric machine 40, and anomalies related to the control apparatus 70. The anomalies in the rotary electric machine 40 include unintentional acceleration or unintentional deceleration of the vehicle. The microcomputer 73 can be configured to determine whether unintentional acceleration or unintentional deceleration of the vehicle has occurred in accordance with at least one of the acceleration *ar* measured by the acceleration sensor 52 and the rotational angle *θ* measured by the angular sensor 64.

The anomalies in the inverter 30 include a short-circuit fault. The short-circuit fault is a fault of at least one of the switches QUH to QWL being fixedly maintained in the on state. The microcomputer 73 can be configured to determine whether the short-circuit fault has occurred in accordance with at least one of the phase currents *Iu, Iv, Iw,* the upper-arm sense voltages, and the lower-arm sense voltages.

The anomalies related to the control apparatus 70 include a power-supply anomaly that power cannot be supplied from the low-voltage power source 26 to the control apparatus 70, and internal malfunctions in the control apparatus 70. The internal malfunctions in the control apparatus 70 include anomalies in the input circuit 71, anomalies in the power supply circuit 72, transfer faults, and voltage output anomalies. The transfer faults represent a situation where the switching command cannot be accurately transferred from the microcomputer 73 to at least one of the upper- and lower-arm drivers 75 and 76. The voltage output anomalies represent that a voltage cannot be outputted from the isolated power supply 74.

The voltage output anomalies include anomalies in the isolated power supply 74 and an anomaly that power cannot be supplied from the low-voltage power source 26 to the isolated power supply 74. The anomaly that power cannot be supplied from the low-voltage power source 26 to the isolated power supply 74 may, for example, occur due to a break in the electric path from the low-voltage power source 26 to the isolated power supply 74. The transfer faults related to, for example, the lower-arm driver 76 as an example include a break in the signal path from the microcomputer 73 to the lower-arm isolation transfer unit corresponding to the lower-arm driver 76.

The one or more anomalies in the power conversion system 10 may occur due to, for example, the collision of the vehicle with another object. The microcomputer 73 can be configured to determine whether the vehicle will collide with another object in accordance with the acceleration ar measured by the acceleration sensor 52. The microcomputer 73 can be configured to determine that the request for executing the three-phase short-circuit control task has occurred in response to determination that the vehicle will collide with another object. The microcomputer 73 can be configured to determine that the request for executing the three-phase short-circuit control task has occurred in response to determination that at least one of the anomalies in the power conversion system 10 has occurred.

The control apparatus 70 includes an anomaly power supply 80 provided in the high-voltage region thereof. The anomaly power supply 80 is configured to generate an anomaly drive voltage based on the output voltage of the smoothing capacitor 32. A switched-mode power supply or a series regulator can be used as the anomaly power supply 80.

The control apparatus 70 includes normal power-supply paths 82, normal diodes 83, anomaly power-supply paths 84, and anomaly switches 85 provided in the high-voltage region thereof. Each normal power-supply path 82 connects between an output terminal of the isolated power supply 74 and the corresponding lower-arm driver 76, so that the lower-arm drive voltage *VdL* is supplied to the corresponding lower-arm driver 76 through the corresponding normal power-supply path 82. Each normal diode 83 is mounted on the corresponding normal power-supply path 82 while the anode thereof is connected to the output terminal of the isolated power supply 74.

Each normal power-supply path 82 has a first portion between the corresponding lower-arm driver 76 and the corresponding normal diode 83, and a second portion between the isolated power supply 74 and the corresponding normal diode 83. Each anomaly power-supply path 84 connects between the first portion of the corresponding normal power-supply path 82 and the anomaly power supply 80. Each anomaly switch 85 is mounted on the corresponding anomaly power-supply path 84. Each anomaly power-supply path 84 is configured such that the anomaly drive voltage is supplied to the corresponding lower-arm driver 76 therethrough.

The short-circuit request signal *Sg1* is inputted to the determining unit 81 through the signal transfer unit 77. Additionally, the lower-arm drive voltage *VdL* outputted from the isolated power supply 74 is supplied to the determining unit 81.

The determining unit 81 is configured to determine whether at least one of the following first and second requirements is satisfied:
The first requirement is that the short-circuit request signal *Sg1* with the logical high level is inputted to the determining unit 81.
The second requirement is that the lower-arm drive voltage *VdL* for each lower-arm switch is lower than a predetermined voltage *Vp.*

Then, the determining unit 81 is configured to determine to execute the three-phase short-circuit control task in response to determination that at least one of the first and second requirements is satisfied.

The predetermined voltage Vp may be set such that, when the lower-arm drive voltage *VdL* for each lower-arm switch is lower than the predetermined voltage *Vp,* it is possible to determine that a sufficient period has elapsed until turn-off of all the upper-arm switches. This aims to prevent an upper- and lower-arm short-circuit when the three-phase short-circuit control task is carried out. That is, the predetermined voltage Vp may be, for example, set to a value equal to or lower than the threshold voltage Vth.

When determining to execute the three-phase short-circuit control task, the determining unit 81 changes each of the anomaly switches 85 from the off state to the on state. This enables power to be supplied from the anomaly power supply 80 to each lower-arm driver 76. Additionally, the determining unit 81 outputs the on command for each lower-arm switch QUL, QVL, QWL to the corresponding lower-arm driver 76, resulting in the three-phase short-circuit control task being carried out.

Let us assume a case where the microcomputer 73 determines that the request for executing the three-phase short-circuit control task has occurred while the connection switch 61a is in the on state. For example, let us assume a specific case where the microcomputer 73 determines that the request for executing the three-phase short-circuit control task has occurred during execution of the temperature-rise control task or the temperature-rise/motor-drive control task.

In each of the cases, the back emf voltage induced in each phase winding 41U, 41V, 41W by the three-phase short-circuit control task may be applied to the battery pack 20 through the connection path 60. This may cause a problem of reduction in reliability of the battery pack 20.

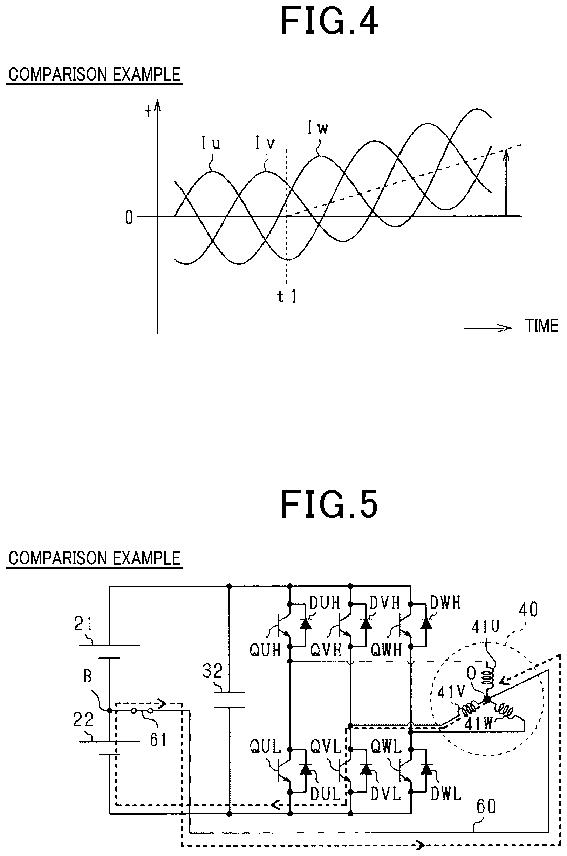

Figs. 4 and 5 illustrate a comparison example, which is different from the first embodiment, where the three-phase short-circuit control task for turning on all the lower-arm switches QUL to QWL is carried out while the connection switch 61a is in the on state. Specifically, Fig. 4 illustrates how the three-phase currents *Iu, Iv, Iw* change before and after execution of the three-phase short-circuit control task. Fig. 5 illustrates an example of a current path occurring during execution of the three-phase short-circuit control task. In Fig. 4, reference character t1 represents a time after which the three-phase short-circuit control task is carried out with the connection switch 61a being in the on state.

In the comparison example, Fig. 5 for example shows the current path occurs, which includes the second battery 22, the connection path 60, the V-phase winding 41V, and the V-phase lower-arm switch QVL. This situation may cause the neutral point O and the intermediate terminal B to be short-circuited to each other, resulting in power being continuously supplied from the second battery 22 to the rotary electric machine 40. This may therefore cause the DC components of each phase current *Iu, Iv, Iw* to increase, resulting in an increase in the voltage applied to the second battery 22. This increase in the voltage applied to the second battery 22 may result in the overvoltage fault occurring in the second battery 22.

Execution of the temperature-rise control task or the temperature-rise/motor-drive control task may result in the above current path occurring, which includes the second battery 22, the connection path 60, the V-phase winding 41V, and the V-phase lower-arm switch QVL. However, because the temperature-rise control task or the temperature-rise/motor-drive control task does not simultaneously turn on all the lower-arm switches QUL to QWL, which differs from the three-phase short-circuit control task, it is possible to prevent a large current from flowing through the connection path 60.

From the above viewpoint, the power conversion apparatus 11 of the first embodiment includes the following configuration that prevents a large current from flowing through the connection path 60 when the three-phase short-circuit control task is carried out with the connection switch 61a being in the on state.

The control apparatus 70 has the configuration that turns off the connection switch 61a in response to determination that the request for executing the three-phase short-circuit control task has occurred.

Specifically, the control apparatus 70 includes a drive circuit 86 provided in the high-voltage region thereof. The drive circuit 86 is configured to switch one of the on state and the off state of the connection switch 61a to the other thereof. To the drive circuit 86, the short-circuit request signal *Sg1* outputted from the microcomputer 73 is inputted through the signal transfer unit 77.

The drive circuit 86 is configured to turn off the connection switch 61a in response to reception of the short-circuit request signal *Sg1* with the logical high level, and maintain the present on or off state of the connection switch 61a in response to reception of the short-circuit request signal *Sg1* with the logical low level. To the drive circuit 86, the drive voltage of the isolated power supply 74 or the anomaly drive voltage can be supplied. The drive circuit 86 serves as a cutoff unit.

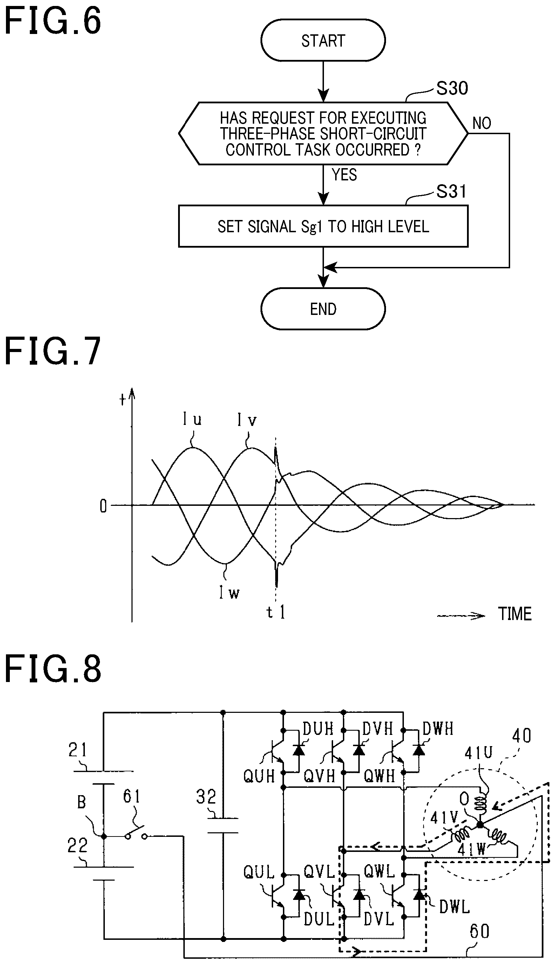

Fig. 6 illustrates a cutoff control routine for cutting off the current flowing through the connection path 60 carried out by the microcomputer 73. The microcomputer 73 is programmed to execute the cutoff control routine every predetermined period.

When starting the cutoff control routine, the microcomputer 73 determines whether the request for executing the three-phase short-circuit control task has occurred in step S30.

In response to determination that no request for executing the three-phase short-circuit control task has occurred (NO in step S30), the microcomputer 73 terminates the cutoff control routine.

Otherwise, in response to determination that the request for executing the three-phase short-circuit control task has occurred (YES in step S30), the cutoff control routine proceeds to step S31.

In step S31, the microcomputer 73 switches the logical level of the short-circuit request signal *Sg1* from the logical low level to the logical high level. This results in the short-circuit request signal *Sg1* with the logical high level being inputted to the drive circuit 86. This enables the drive circuit 86 to turn off the connection switch 61a, thus cutting off the current flowing through the connection path 60.

Figs. 7 and 8 illustrate an example where the three-phase short-circuit control task is carried out when the connection switch 61a is in the off state. Specifically, Fig. 7 illustrates how the three-phase currents *Iu, Iv, Iw* change before and after execution of the three-phase short-circuit control task. Fig. 8 illustrates an example of a current path occurring during execution of the three-phase short-circuit control task. In Fig. 7, reference character t1 represents a time when the connection switch 61a is turned off and execution of the three-phase short-circuit control task is started.

In the example, Fig. 8 for example shows the current path occurs, which includes the V-phase winding 41V, the V-phase lower-arm switch QVL, the W-phase lower-arm switch QWL, and the W-phase winding 41W. This situation enables a current to circulate between the rotary electric machine 40 and the inverter 30, resulting in power being consumed therebetween. This therefore reduces the amplitude of each three-phase current *Iu, Iv, Iw.* The turnoff of the connection switch 61a electrically isolates the battery pack 20 from the rotary electric machine 40, making it possible to prevent a voltage from being applied to the battery pack 20.

The power conversion apparatus 11 of the first embodiment is configured to turn off the connection switch 61a when the microcomputer 73 determines that the request for executing the three-phase short-circuit control task has occurred. This configuration prevents the connection switch 61a from being turned on during execution of the three-phase short-circuit control task. This therefore prevents the rotary electric machine 40 from being short-circuited to the battery pack 20 through the connection path 60 during execution of the three-phase short-circuit control task, thus preventing a voltage from being applied to the first and second batteries 21 and 22. This inhibits each of the first and second batteries 21 and 22 from becoming in the overvoltage state, making it possible to avoid reduction in reliability of each of the first and second batteries 21 and 22.

The power conversion apparatus 11 of the first embodiment is configured to determine that the request for executing the three-phase short-circuit control task has occurred in response to receipt of the signal Sge indicative of the start of executing the ground-fault detection operations. This results in the ground-fault detection operations being carried out while the connection switch 61a is turned off and the three-phase short-circuit control task for the high-voltage circuit is carried out. The ground-fault detection operations of the high-voltage circuit make it possible to determine whether there is a ground fault in the rotary electric machine 40 located at the output side of the inverter 30. This enables the ground-fault detection range in the rotary electric machine 40 to be wider as compared with a case where the ground-fault detection operations of the high-voltage circuit are carried out with all the switches QUH to QWL being in the off state. Additionally, the connection switch 61a is kept in the off state during execution of the three-phase short-circuit control task to thereby avoid reduction in reliability of each of the first and second batteries 21 and 22 set forth above.

Accordingly, the power conversion apparatus 11 of the first embodiment makes it possible to appropriately perform the ground-fault detection operations while avoiding reduction in reliability of each of the first and second batteries 21 and 22 set forth above.

### Second embodiment

The following describes the second embodiment with reference to Figs. 7 to 10. In particular, the following describes mainly different points of the second embodiment as compared with the first embodiment.

The second embodiment changes the configuration of the connection switch according to the first embodiment, which aims to reduce a period during which the three-phase short-circuit control task is carried out while the connection switch is in the on state.

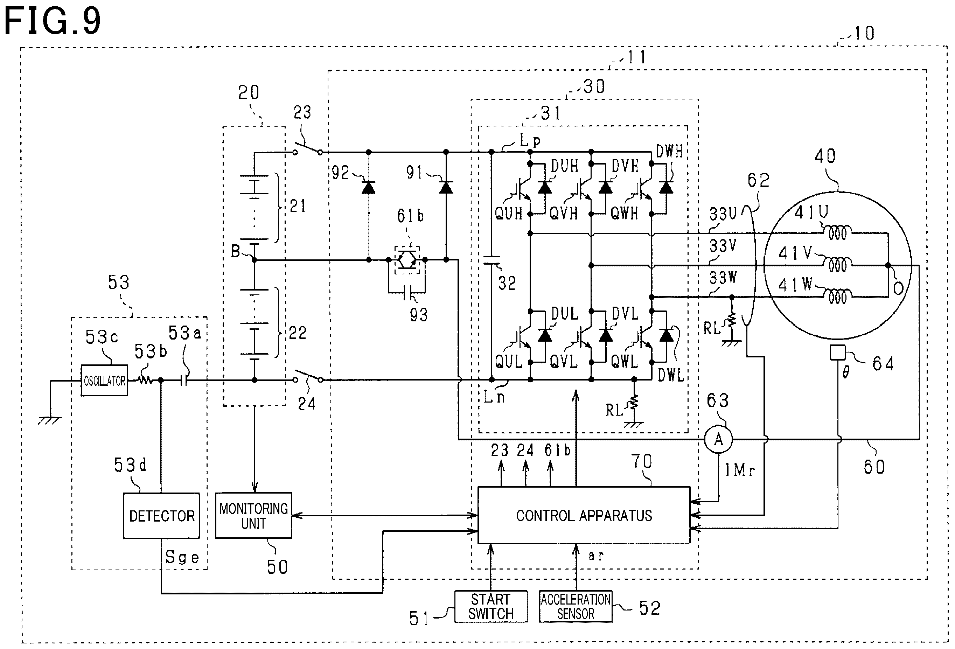

The power conversion apparatus 11 of the second embodiment includes, as illustrated in Fig. 9, a connection switch 61b in place of the connection switch 61a of the first embodiment. Identical reference characters are assigned in Figs. 1 and 9 to respective identical components between the power conversion systems 10 illustrated in respective Figs. 1 and 9 for the sake of simple descriptions of the second embodiment.

The connection switch 61b of the second embodiment is configured to enable a current flowing through the connection path 60 to pass therethrough or cut off the current. As compared with the connection switch 61a of the first embodiment, the connection switch 61b has a shorter turnoff time and a higher on-resistance. For example, the connection switch 61b is a semiconductor switch configured to bidirectionally enable a current flowing through the connection path 60 to pass therethrough or cut off the current. Typically, the connection switch 61b is comprised of a pair of IGBTs. Like the connection switch 61a of the first embodiment, the control apparatus 70 is configured to control the connection switch 61b to be turned on or off.

The power conversion apparatus 11 of the second embodiment, which uses the connection switch 61b, makes it possible to cut off the current flowing through the connection path 60 faster as compared with the power conversion apparatus 11 of the first embodiment, which uses the connection switch 61a. In contrast, the power conversion apparatus 11 of the second embodiment, which uses the connection switch 61b, may cause a higher surge voltage induced due to the current cutoff as compared with the power conversion apparatus 11 of the first embodiment, which uses the connection switch 61a. This may result in reduction in reliability of the connection switch 61b due to such a high voltage being applied across the connection switch 61b.

From this viewpoint, the power conversion apparatus 11 of the second embodiment includes a first diode 91, a second diode 92, and a parallel capacitor 93. The anode of the first diode 91 is connected to a connection line between the connection switch 61b and the neutral point O, and the cathode of the first diode 91 is connected to the positive busbar Lp. The anode of the second diode 92 is connected to the connection line between the connection switch 61b and the intermediate terminal B, and the cathode of the second diode 92 is connected to the positive busbar Lp. The parallel capacitor 93 is mounted on the connection path 60, and is connected in parallel to the connection switch 61b.

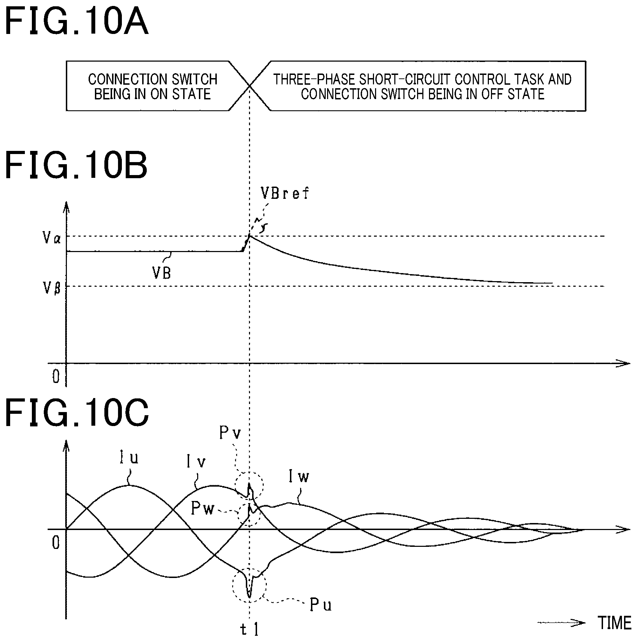

Figs. 10A, 10B, and 10C illustrate a control example related to the power conversion apparatus 11 before and after execution of the three-phase short-circuit control task. Specifically, Fig. 10A illustrates the control example related to the power conversion apparatus 11, Fig. 10B illustrates how the terminal voltage *VB* across the battery pack 20 changes over time, and Fig. 10C illustrates how the three-phase currents *Iu, Iv,* and *Iw* change over time. In Fig. 10B, a solid curve shows how the terminal voltage *VB* across the battery pack 20 changes over time according to the second embodiment. In Fig. 10B, a dashed curve shows how a terminal voltage *VBref* across the battery pack 20 changes over time according to a comparison example that uses a comparative connection switch whose turnoff time is greater than that of the connection switch 61b.

In each of Figs. 10A to 10C, one of the temperature-rise control task and the temperature-rise/motor-drive control task is carried out before time t1. That is, the connection switch 61b is in the on state before the time t1. When it is determined by the microcomputer 73 that the terminal voltage *VB* across the battery pack 20 has exceeded a predetermined upper limit voltage *Vα,* the three-phase short-circuit control task is carried out and the connection switch 61b is turned off. The predetermined upper limit voltage *Vα* is, for example, the upper limit voltage of the usable voltage range of the battery pack 20.

The connection switch 61b is turned off immediately after the time t1. This causes the battery pack 20 and the rotary electric machine 40 to be electrically isolated from each other, making it possible to prevent a voltage from being applied to the battery pack 20 due to electrical connection between the battery pack 20 and the rotary electric machine 40 through the connection path 60. This therefore prevents more appropriately an increase in the terminal voltage *VB* across the battery pack 20 as compared with the comparison example where the connection switch having a longer turnoff time than the turnoff time of the connection switch 61b is used. In contrast, the comparison example, which uses the connection switch having a longer turnoff time than the turnoff time of the connection switch 61b, may result in the period for which the battery pack 20 and the rotary electric machine 40 are connected through the connection path 60 being longer as compared with that for the second embodiment using the connection switch 61b. This may result in the terminal voltage *VBref* across the battery pack 20 increasing more as compared with the terminal voltage *VB* across the battery pack 20 according to the second embodiment.

A surge voltage may be induced due to when the connection switch 61b is turned off and the three-phase short-circuit control task is started at the time t1. This may result in, as illustrated in Fig. 10C, transient currents *Pu, Pv,* and *Pw* being superimposed on the respective three-phase currents *Iu, Iv,* and *Iw.* From this viewpoint, the first diode 91 or the second diode 92 of the second embodiment ensures a backflow path through which the transient currents *Pu, Pv,* and *Pw* is circulated therethrough. Additionally, the parallel capacitor 93 reduces a voltage change across the connection switch 61b due to the transient currents *Pu, Pv,* and *Pw.*

The power conversion apparatus 11 of the second embodiment achieves the following advantageous benefits.

The power conversion apparatus 11 of the second embodiment includes the connection switch 61b mounted on the connection path 60. This enables the period from determination that the three-phase short-circuit control task has occurred to turnoff of the connection switch 61b according to the second embodiment to be shorter as compared with a case where another connection switch, which is longer turnoff time, is mounted on the connection path 60. This therefore makes shorter the period for which the three-phase short-circuit control task is carried out with the connection switch 61b being in the on state as compared with the case where another connection switch, which is longer turnoff time, is mounted on the connection path 60. This reliably suppresses an increase in the terminal voltage VB across the battery pack 20.

A surge voltage may be induced due to when the connection switch 61b is turned off and the three-phase short-circuit control task is started. This would result in the transient currents *Pu, Pv,* and *Pw* being superimposed on the respective three-phase currents *Iu, Iv,* and *Iw.* This would cause a voltage applied across the connection switch 61b to increase, resulting in reduction in reliability of the connection switch 61b.

From this viewpoint, the first diode 91 or the second diode 92 of the second embodiment enables a current flowing through the connection path 60 to be circulated through the first diode 91 or the second diode 92. This prevents a voltage applied across the connection switch 61b due to the occurrence of the transient currents *Pu, Pv,* and *Pw* from increasing.

Additionally, the parallel capacitor 93 connected in parallel to the connection switch 61b suppresses the change in the voltage applied across the connection switch 61b due to the occurrence of the transient currents *Pu, Pv,* and *Pw.* This prevents the voltage, which is applied across the connection switch 61b when the connection switch 61b is turned off and the three-phase short-circuit control task is started, from increasing, making it possible to prevent the occurrence of reduction in reliability of the connection switch 61b.

The first and second diodes 91 and 92 are located on both sides of the connection switch 61b. This configuration enables, when a current is flowing through the connection path 60 from the neutral point O to the intermediate terminal B at the turnoff of the connection switch 61b, the current to be circulated through the first diode 91. Additionally, this configuration enables, when a current is flowing through the connection path 60 from the intermediate point B to the neutral point O at the turnoff of the connection switch 61b, the current to be circulated through the second diode 92. That is, the power conversion apparatus 11 of the second embodiment enables a current flowing through the connection path 60 to be circulated through any one of the first diode 91 and the second diode 92 whichever the current is directed from the intermediate point B to the neutral point O or the neutral point O to the intermediate point B. This therefore prevents the voltage, which is applied across the connection switch 61b when the connection switch 61b is turned off and the three-phase short-circuit control task is started, from increasing.

The power conversion apparatus 11 of the second embodiment is configured such that the temperature-rise control task is carried out with the connection switch 61b being in the on state. During execution of the temperature-rise control task, because an alternating current flows through the connection path 60, the alternating current flows through the connection path 60 in each of the direction from the intermediate point B to the neutral point O and the direction from the neutral point O to the intermediate point B.

For the case where the temperature-rise control task is carried out with the connection switch 61b being in the on state, the above configuration power conversion apparatus 11 of the second embodiment, which includes the first and second diodes 91 and 92 located on both sides of the connection switch 61b, makes it possible to prevent the voltage applied across the connection switch 61b due to the turnoff of the connection switch 61b from increasing.

### Third embodiment

The following describes the third embodiment. In particular, the following describes mainly different points of the third embodiment as compared with the first and second embodiments.

The third embodiment changes the configuration of the connection switch according to the first or second embodiment, which aims to achieve both high-speed cutoff of a current flowing through the connection path 60 and reduction in conduction loss resulting from a connection switch being in the on state.

Let us consider a situation where, even if the three-phase short-circuit control task is carried out, the back emf voltage induced in each of the three-phase windings 41U, 41V, and 41W may not increase up to a level that causes an overvoltage fault across the battery pack 20. In this situation, it is preferable not to immediately cut off the current flowing through the connection path 60 but to reduce conduction loss resulting from the connection switch being conducted.

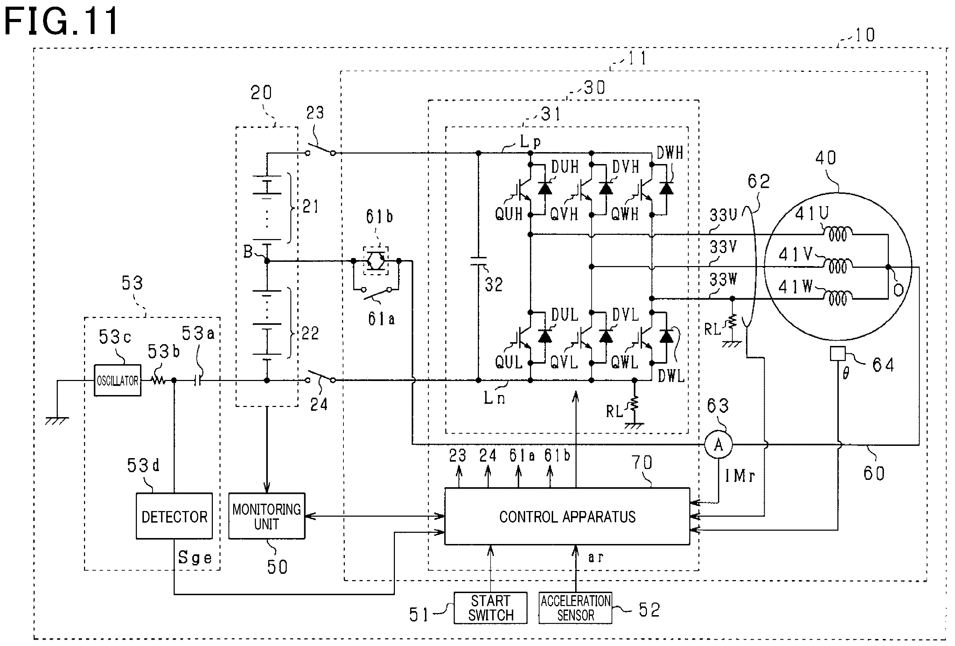

From this viewpoint, the power conversion apparatus 11 includes, as illustrated in Fig. 11, a first connection switch 61a and a second connection switch 61b connected in parallel to each other. As the first connection switch 61a of the third embodiment, the first connection switch 61a of the first embodiment is used, and as the second connection switch 61b of the third embodiment, the second connection switch 61b of the second embodiment is used. The second connection switch 61b is mounted on the connection path 60. The first connection switch 61a is connected in parallel to the second connection switch 61b. Identical reference characters are assigned in Figs. 1, 9, and 11 to respective identical components between the power conversion systems 10 illustrated in respective Figs. 1, 9, and 11 for the sake of simple descriptions of the third embodiment.

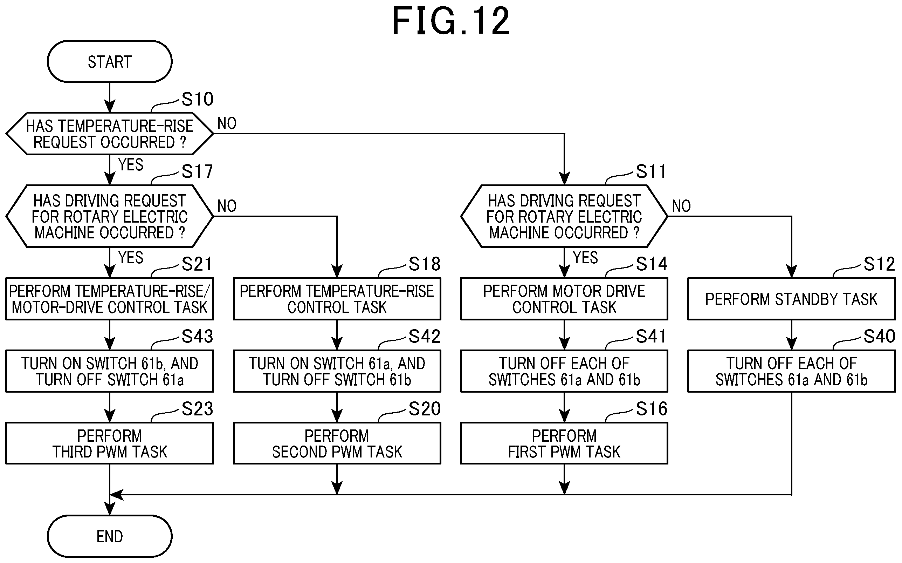

Fig. 12 illustrates operations of a switching control routine carried out by the control apparatus 70. The control apparatus 70 is for example programmed to execute the switching control routine every predetermined control cycle. Identical reference characters are assigned in Figs. 2 and 12 to respective identical operations between the switching control routines illustrated in Figs. 2 and 12 for the sake of simple descriptions of the switching control routine according to the third embodiment.

Following the operation in step S12, the switching control routine proceeds to step S40. In step S40, the control apparatus 70 turns off each of the connection switches 61a and 61b, thus cutting off the electrical connection between the intermediate terminal B and the neutral point O. After the operation in step S40, the control apparatus 70 terminates the switching control routine. Additionally, following the operation in step S14, the switching control routine proceeds to step S41. The operation in step S41 is the same as the operation in step S40. After the operation in step S41, the switching control routine proceeds to step S16.

Following the operation in step S18, the switching control routine proceeds to step S42. In step S42, the control apparatus 70 turns on the first connection switch 61a and turns off the connection switch 61b. After the operation in step S42, the switching control routine proceeds to step S20.

Following the operation in step S21, the switching control routine proceeds to step S43. In step S43, the control apparatus 70 turns off the first connection switch 61a and turns on the connection switch 61b. After the operation in step S43, the switching control routine proceeds to step S23.

The power conversion apparatus 11 of the third embodiment achieves the following advantageous benefits.

The power conversion apparatus 11 of the third embodiment includes the second connection switch 61b mounted on the connection path 60, and the first connection switch 61a connected in parallel to the second connection switch 61b. As described in the second embodiment, the second connection switch 61b has a shorter turnoff time than that of the first connection switch 61a and a higher on-resistance than that of the first connection switch 61a. This configuration enables any one of the first connection switch 61a and the second connection switch 61b to be turned on depending on the operating conditions of the power conversion apparatus 11, making it possible to establish both high-speed cutoff of a current flowing through the connection path 60 and reduction in conduction loss resulting from one of the first and second connection switches 61a and 61b being in the on state.

While the rotor of the rotary electric machine 40 is rotating, it is preferable to turn off a connection switch mounted on the connection path 60 immediately in response to determination that the request for executing the three-phase short-circuit control task has occurred, because the back emf voltage is induced in each of the three-phase windings 41U, 41V, and 41W. In contrast, while the rotor of the rotary electric machine 40 is stopped, the battery pack 20 is unlikely to become in the overvoltage state even if the three-phase short-circuit control task is carried out with a connection switch mounted on the connection path 60 being in the on state. It is therefore preferable to reduce conduction loss resulting from the connection switch being in the on state as compared with high-speed turnoff of current flow through the connection path 60.

From this viewpoint, the power conversion apparatus 11 of the third embodiment is configured to determine whether the driving request for the rotary electric machine 40 has occurred.

Upon determination that the driving request for the rotary electric machine 40 has occurred, the control apparatus 70 turns off the first connection switch 61a, and performs the motor-drive control task or the temperature-rise control task while the second connection switch 61b is in the on state. That is, the second connection switch 61b, which has a shorter turnoff time than that of the first connection switch 61a, is turned on. This enables the second connection switch 61b to be turned on faster in response to determination of executing the three-phase short-circuit control task as compared with the first connection switch 61a being turned on. This achieves cutoff of a current flowing through the connection path 60 faster as compared with a case of turning off the first connection switch 61a.

On the other hand, upon determination that no driving request for the rotary electric machine 40 has occurred, the control apparatus 70 turns on the first connection switch 61a, and turns off the second connection switch 61b. That is, the control apparatus 70 performs the temperature-rise control task while maintaining the on state of the first connection switch 61a, which has a lower on-resistance than that of the second connection switch 61b. This makes smaller conduction loss resulting from the first connection switch 61a being in the on state as compared with the second connection switch 61b being in the on state.

As described above, the third embodiment changes one of the first and second connection switches 61a and 61b to be turned on depending on whether the driving request for the rotary electric machine 40 has occurred, making it possible to achieve both high-speed cutoff of a current flowing through the connection path 60 and reduction in conduction loss resulting from one of the connection switches 61a and 61b being in the on state.

### Modification of third embodiment

Let us consider a situation where, even if the rotor of the rotary electric machine 40 is rotating, the back emf voltage induced in each of the three-phase windings 41U, 41V, and 41W may be a low level when the rotational speed of the rotor is low. In this situation, even if the three-phase short-circuit control task is carried out, the back emf voltage induced in each of the three-phase windings 41U, 41V, and 41W may not increase up to the level that causes an overvoltage fault across the battery pack 20.

From this viewpoint, a switching control routine carried out by the control apparatus 70 according to a modification of the third embodiment is changed as compared with that carried out by the control apparatus 70 according to the third embodiment.

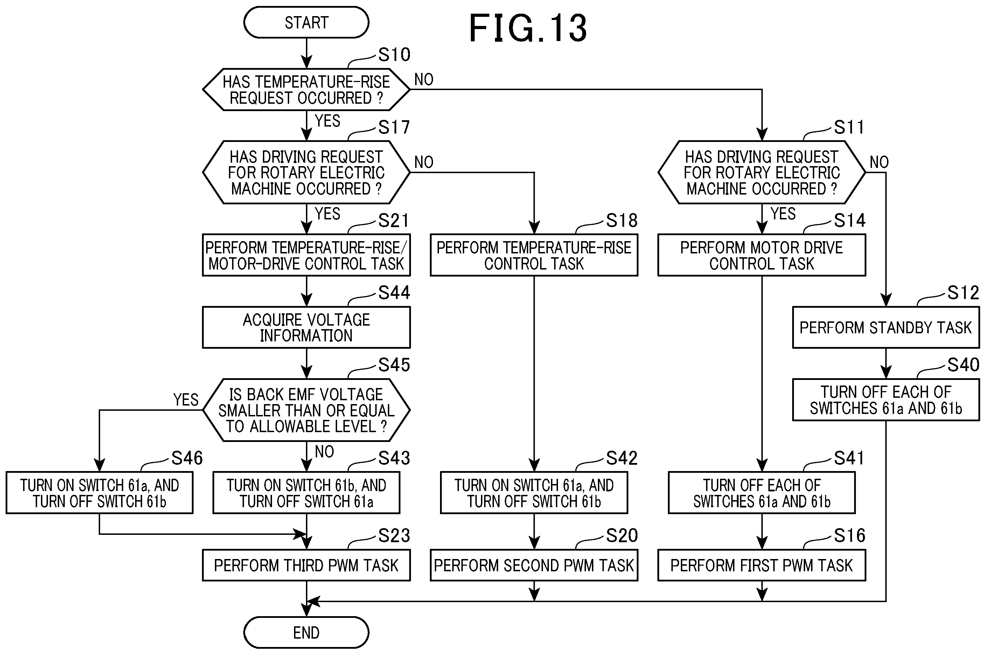

Fig. 13 illustrates operations of the switching control routine according to the modification of the third embodiment. The control apparatus 70 is for example programmed to execute the switching control routine every predetermined control cycle. Identical reference characters are assigned in Figs. 12 and 13 to respective identical operations between the switching control routines illustrated in Figs. 12 and 13 for the sake of simple descriptions of the switching control routine according to the modification of the third embodiment.

Following the operation in step S21, the switching control routine proceeds to step S44. In step S44, the control apparatus 70 acquires voltage information on the back emf voltage to be induced in each of the three-phase windings 41U, 41V, and 41W. As the voltage information according to the modification of the third embodiment, the rotational angle *θ* measured by the angular sensor 64 is used. The phase currents *Iu, Iv, Iw* measured by the one or more phase current sensors 62 can be used as the voltage information. A predicted value of the back emf voltage induced in each of the three-phase windings 41U, 41V, and 41W, which is predicted based on at least one of the rotational angle *θ* measured by the angular sensor 64 and the phase currents *Iu, Iv, Iw* measured by the one or more phase current sensors 62, can be used as the voltage information. The operation in step S44 is not limited to be carried out after the operation in step S21. That is, the operation in step S44 can be carried out, for example, after the operation in step S10.

Following the operation in step S44, the control apparatus 70 determines whether the back emf voltage to be induced in each of the three-phase windings 41U, 41V, and 41W is smaller than or equal to a predetermined allowable level in step S45.

For example, the control apparatus 70 according to the modification of the third embodiment calculates, based on the rotational angle *θ* measured by the angular sensor 64, a rotational speed of the rotor of the rotary electric machine 40 in step S45. Then, the control apparatus 70 determines whether the calculated rotational speed of the rotor of the rotary electric machine 40 is lower than or equal to a predetermined allowable rotational speed in step S45. The allowable rotational speed can be determined based on at least one of a predetermined voltage proof across the battery pack 20 or a predetermined voltage proof across the smoothing capacitor 32. Upon determination that the calculated rotational speed of the rotor of the rotary electric machine 40 is lower than or equal to the predetermined allowable rotational speed, the control apparatus 70 determines that the back emf voltage to be induced in each of the three-phase windings 41U, 41V, and 41W is smaller than or equal to the predetermined allowable level (YES in step S45). Then, the switching control routine proceeds to step S46. Otherwise, upon determination that the calculated rotational speed of the rotor of the rotary electric machine 40 is higher than the predetermined allowable rotational speed, the control apparatus 70 determines that the back emf voltage to be induced in each of the three-phase windings 41U, 41V, and 41W is greater than the predetermined allowable level (NO in step S45). Then, the switching control routine proceeds to step S43.

As another example, the control apparatus 70 according to the modification of the third embodiment can calculate, based on the phase currents *Iu, Iv, Iw* measured by the one or more phase current sensors 62 as the voltage information, a root-mean-square (rms) value of each of the phase currents *Iu, Iv, Iw* in step S45. Then, the control apparatus 70 determines whether the rms value of each of the phase currents *Iu, Iv, Iw* is lower than or equal to a predetermined allowable rms value in step S45.

As a further example, the control apparatus 70 according to the modification of the third embodiment can determine whether the predicted value of back emf voltage induced in each of the three-phase windings 41U, 41V, and 41W acquired as the voltage information is lower than or equal to a predetermined allowable back emf voltage. Each of the allowable rms value and the allowable back emf voltage can be determined based on at least one of the predetermined voltage proof across the battery pack 20 or the predetermined voltage proof across the smoothing capacitor 32.

In step S46, the control apparatus 70 tuns on the first connection switch 61a and turns off the second connection switch 61b, and thereafter the switching control routine proceeds to step S23.

Upon determination that the driving request for the rotary electric machine 40 has occurred, the control apparatus 70 according to the modification of the third embodiment is configured to determine whether the back emf voltage to be induced in each of the three-phase windings 41U, 41V, and 41W is lower than or equal to the predetermined allowable level. In response to determination that the back emf voltage to be induced in each of the three-phase windings 41U, 41V, and 41W is lower than or equal to the predetermined allowable level, the control apparatus 70 turns on the first connection switch 61a, and turns off the second connection switch 61b. That is, the first connection switch 61a, which has a lower on-resistance than that of the second connection switch 61b, is turned on. That is, even if the rotor of the rotary electric machine 40 is rotating, the modification of the third embodiment gives higher priority to reduction in conduction loss resulting from one of the connection switches 61a and 61b being in the on state than high-speed cutoff of a current flowing through the connection path 60 as long as it is determined that the battery pack 20 is unlikely to become in the overvoltage state.

### Fourth embodiment

The following describes the fourth embodiment. In particular, the following describes mainly different points of the fourth embodiment as compared with the first embodiment.

The fourth embodiment changes the component, which performs the cutoff control routine, from the microcomputer 73 to the determining unit 81.

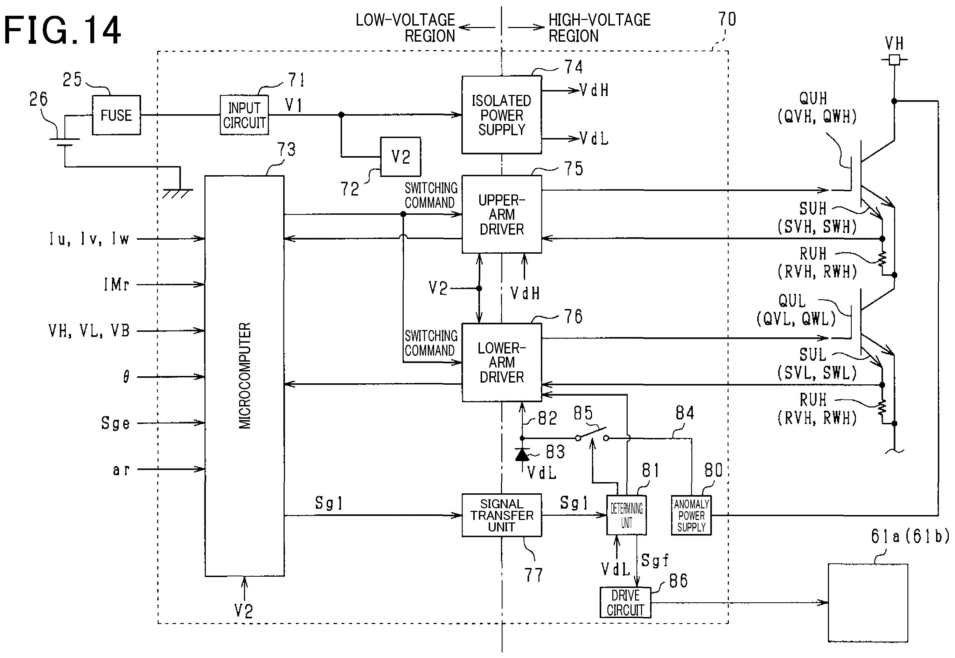

Fig. 14 illustrates the configuration of a control apparatus 70 according to the fourth embodiment. Identical reference characters are assigned in Figs. 3 and 14 to respective identical components between the control apparatuses 70 illustrated in respective Figs. 3 and 14 for the sake of simple descriptions of the fourth embodiment.

The determining unit 81 changes the logical level of a cutoff signal *Sgf* from the logical low level to the logical high level in response to determination that the short-circuit request signal *Sg1* with the logical high level being inputted to the determining unit 81. The cutoff signal *Sgf* is a signal indicative of whether a request for turning off the first connection switch 61a has occurred. Specifically, the cutoff signal *Sgf,* which has the logical low level, represents that no request for turning off the first connection switch 61a has occurred. In contrast, the cutoff signal *Sgf,* which has the logical high level, represents that the request for turning off the first connection switch 61a has occurred.

To the drive circuit 86, the cutoff signal *Sgf* is configured to be inputted in place of the short-circuit request signal *Sg1* from the determining unit 81. The drive circuit 86 is configured to turn off the connection switch 61a in response to reception of the cutoff signal *Sgf* with the logical high level, and maintain the present on or off state of the connection switch 61a in response to reception of the cutoff signal *Sgf* with the logical low level.

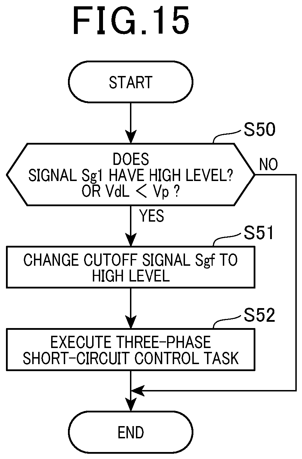

Fig. 15 illustrates a cutoff control routine according to the fourth embodiment, which is carried out by the determining unit 81. The microcomputer 73 is configured to execute the cutoff control routine every predetermined period.

When starting the cutoff control routine, the determining unit 81 determines whether to execute the three-phase short-circuit control task in step S50. The determining unit 81 according to the fourth embodiment is configured to determine whether at least one of the following conditions *A* and B is satisfied:
The condition A is that the short-circuit request signal *Sg1* has the logical high level.
The condition B is that the lower-arm drive voltage *VdL* for each lower-arm switch is lower than the predetermined voltage Vp.

Upon determination that no conditions A and B are satisfied, the determining unit 81 determines not to execute the three-phase short-circuit control task (NO in step S50), the determining unit 81 terminates the cutoff control routine.

Otherwise, upon determination that at least one of the conditions *A* and B is satisfied, the determining unit 81 determines to execute the three-phase short-circuit control task (YES in step S50). Then, the cutoff control routine proceeds to step S51.

In step S51, the determining unit 81 changes the cutoff signal *Sgf* from the logical low level to the logical high level. This causes the cutoff signal *Sgf* with the logical high level to be inputted to the drive circuit 86 from the determining unit 81, resulting in the first connection switch 61a being turned off. This therefore prevents a current flowing through the connection path 60 from being cut off.

Following the operation in step S51, the determining unit 81 executes the three-phase short-circuit control task. Specifically, the determining unit 81 outputs the on command for each lower-arm switch QUL, QVL, QWL to the corresponding lower-arm driver 76, resulting in the three-phase short-circuit control task being carried out.

The fourth embodiment set forth above changes the cutoff signal *Sgf* from the logical low level to the logical high level before outputting the on command for each lower-arm switch QUL, QVL, QWL to the corresponding lower-arm driver 76. This configuration therefore makes earlier the timing of turning off the first connection switch 61a than the timing of outputting the on command for each lower-arm switch QUL, QVL, QWL to the corresponding lower-arm driver 76. This reliably prevents execution of the three-phase short-circuit control task while the first connection switch 61a is in the on state.

### Other modifications

The above embodiments can be modified as follows:
The switching control tasks with the first connection switch 61a being in the on state according to the first embodiment are the temperature-rise control task and the temperature-rise/motor-drive control task, but the present disclosure is not limited thereto.

The control apparatus 70 can be configured to perform, as the switching control tasks with the first connection switch 61a being in the on state, energy-management control task. Specifically, the control apparatus 70 can be configured to perform, as the energy-management control task, on-off switching operations of each of the switches QUH to QWL with the connection switch 61a being in an on state to accordingly cause a direct current to flow between the first battery 21 and the second battery 22 through the switching device unit 31, the phase windings 41U, 41V, and 41W, and the connection path 60. This enables power to be transferred from one of the first and second batteries 21 and 22 to the other thereof.

When the control apparatus 70 performs the energy-management control task in place of the temperature-rise control task, the switching control routine illustrated in Fig. 2 can be changed as follows. In the following descriptions, let us assume that, as the energy-management control task, an equalization task is carried out; the equalization task aims to equalize the terminal voltage VH across the first battery 21 and the terminal voltage VL across the second battery 22.

In step S10, the control apparatus 70 can determine whether an equalization request for equalizing the terminal voltage VH across the first battery 21 and the terminal voltage VL across the second battery 22 has occurred in place of determination of whether the temperature-rise request for the first and second batteries 21 and 22 has occurred. Specifically, the control apparatus 70 can determine whether an absolute value of the difference between the terminal voltage VH across the first battery 21 and the terminal voltage VL across the second battery 22 is higher than a predetermined threshold voltage, and determine that the equalization request for equalizing the terminal voltage VH across the first battery 21 and the terminal voltage VL across the second battery 22 has occurred upon determination that the absolute value of the difference between the terminal voltage VH across the first battery 21 and the terminal voltage VL across the second battery 22 is higher than the predetermined threshold voltage.

In step S18, the control apparatus 70 can perform the equalization task in place of the temperature-rise control task. In step S20, the control apparatus 70 can perform a modified second PWM task of the equalization task that calculates the modulation factor for each U-, V-, and W-phase in accordance with the terminal voltage VH across the first battery 21 and the terminal voltage VL across the second battery 22. Specifically, the control apparatus 70 can subtract, from the terminal voltage VH across the first battery 21, the terminal voltage VL across the second battery 22 to accordingly calculate a determination voltage. Then, the control apparatus 70 can determine whether the calculated determination voltage is a positive value or a negative value, determine that a neutral-point command current, which is a direct current according to this modification, is a positive value upon the calculated determination voltage is positive, and determine that the neutral-point command current is negative upon the calculated determination voltage is negative. The modified second PWM task can be configured to increase the absolute value of the neutral-point command current as the absolute value of the determination voltage increases. The modified second PWM task of the equalization task is substantially identical to the second PWM task of the temperature-rise control task.

In step S21, the control apparatus 70 can perform an equalization/motor-drive control task in place of the temperature-rise/motor-drive control task. In step S23, the control apparatus 70 can perform a modified third PWM task that calculates the modulation factor for each U-, V-, and W-phase in accordance with the requested target torque for the rotary electric machine 40, the terminal voltage VH across the first battery 21, and the terminal voltage VL across the second battery 22. Like the equalization control task, the equalization/motor-drive control task determines the neutral-point command current.

The energy-management control task can be configured to perform power transfer between the first battery 21 and the second battery 22 without the purpose of equalizing the terminal voltage VH across the first battery 21 and the terminal voltage VL across the second battery 22. There may be situations where power transfer is carried out between the first battery 21 and the second battery 22 without the purpose of equalizing the terminal voltage VH across the first battery 21 and the terminal voltage VL across the second battery 22. As one of the situations, one of the first and second batteries 21 and 22 is configured to be connectable with a battery charger provided outside the power conversion system 10. In this situation, power is transferred from the one of the first and second batteries 21 and 22, which is connected with the battery charger, to the other thereof.

Execution of the energy-management control task in this situation enables a current to flow through the connection path 60 in any one of the direction from the intermediate point B to the neutral point O and the direction from the neutral point O to the intermediate point B. Specifically, execution of the energy-management control task for transferring power from the first battery 21 to the second battery 22 results in the current flowing through the connection path 60 in the direction from the neutral point O to the intermediate point B. In contrast, execution of the energy-management control task for transferring power from the second battery 22 to the first battery 21 results in the current flowing through the connection path 60 in the direction from the intermediate point B to the neutral point O.

As the second connection switch 61b according to each of the second and third embodiments, a semiconductor switch configured to enable a current to pass therethrough in only one direction or cut off of the current can be used in place of a semiconductor switch configured to bidirectionally enable a current flowing through the connection path 60 to pass therethrough or cut off the current. In an example situation where power transfer based on the energy-management control task is carried out only from any one of the first and second batteries 21 and 22 to the other thereof according to the second embodiment, the semiconductor switch configured to enable a current to pass therethrough in only one direction or cut off of the current can be used.

For example, if power transfer based on the energy-management control task is carried out only from the first battery 21 to the second battery 22, a semiconductor switch configured to enable a current to pass therethrough in the direction from the neutral point O to the intermediate point B can be preferably used.

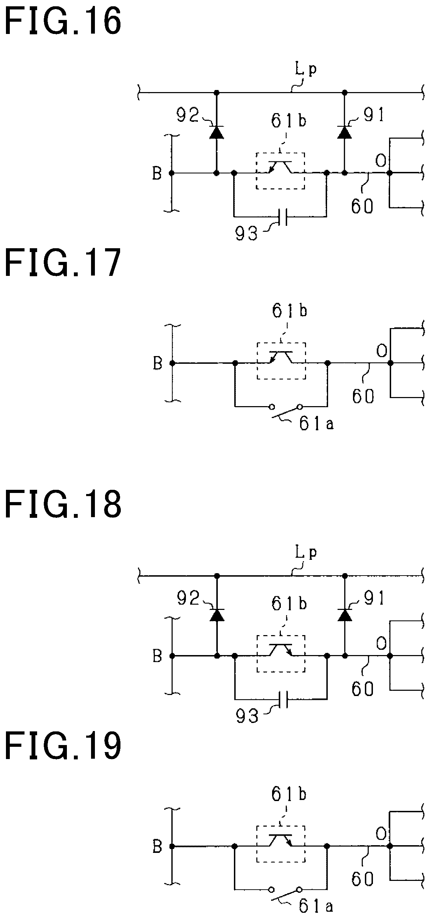

Each of Figs. 16 and 17 illustrates an example configuration where an IGBT that enables a current to pass therethrough in the direction from the neutral point O to the intermediate point B is used as the second connection switch 61b.

As another example, if power transfer based on the energy-management control task is carried out only from the second battery 22 to the first battery 21, a semiconductor switch configured to enable a current to pass therethrough in the direction from the intermediate point B to the neutral point O can be preferably used.

Each of Figs. 18 and 19 illustrates an example configuration where an IGBT that enables a current to pass therethrough in the direction from the intermediate point B to the neutral point O is used as the second connection switch 61b.

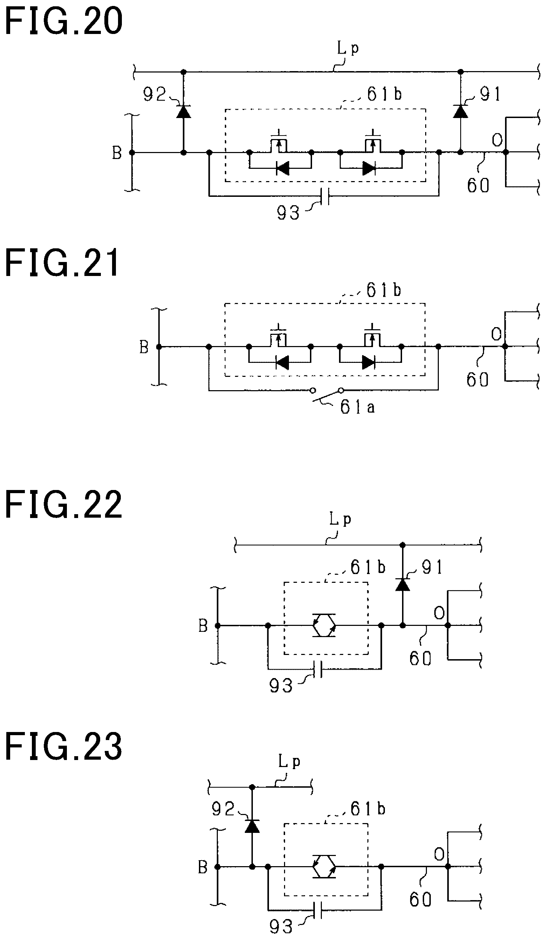

One or more N-channel metal-oxide semiconductor field-effect transistors (MOSFETs) can be used as the second connection switch 61b according to the second embodiment. Fig. 20 illustrates a modified configuration where, in the configuration illustrated in Fig. 9, a pair of N-channel MOSFETs whose sources are connected to each other is used as the second connection switch 61b. Fig. 21 illustrates a modified configuration where, in the configuration illustrated in Fig. 11, a pair of N-channel MOSFETs whose sources are connected to each other is used as the second connection switch 61b.

One of the first diode 91 and the second diode 92 according to the second embodiment can be omitted. For example, if power transfer based on the energy-management control task is carried out from the first battery 21 to the second battery 22, a current flows through the connection path 60 in only the direction from the neutral point O to the intermediate point B. In this case, as illustrated in Fig. 22, the second diode 92 can be omitted. As another example, if power transfer based on the energy-management control task is carried out from the second battery 22 to the first battery 21, a current flows through the connection path 60 in only the direction from the intermediate point B to the neutral point O. In this case, as illustrated in Fig. 23, the first diode 91 can be omitted.

The above modification where one of the first diode 91 and the second diode 92 according to the second embodiment can be omitted depending on how the energy-management control task is carried out makes it possible to suppress an increase in the voltage applied across the second connection switch 61b while reducing the number of diodes included in the power conversion apparatus 11.

Both the first and second diodes 91 and 92 according to the second embodiment can be omitted.

The parallel capacitor 93 according to the second embodiment can be omitted.

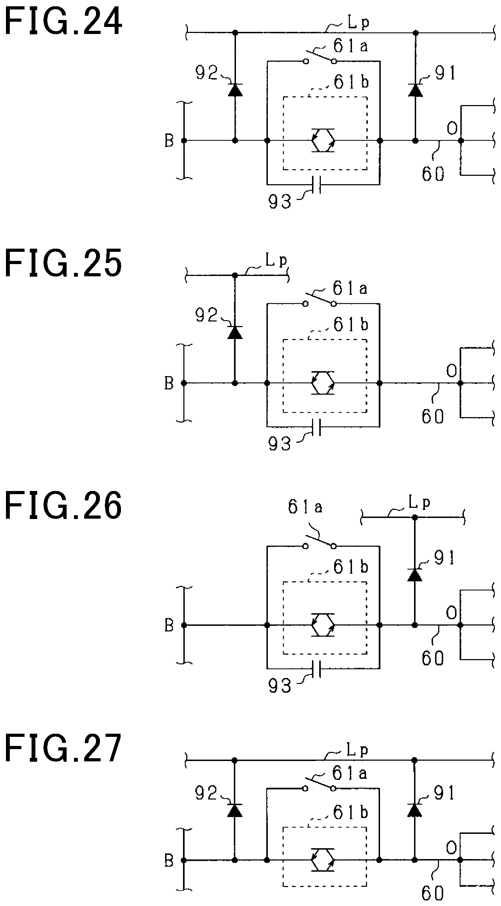

The first embodiment and/or its modifications, the second embodiment and/or its modifications, the third embodiment and/or its modifications, and the fourth embodiment and/or its modifications can be combined with one another, and one of the combinations can be implemented. For example, as a first example combination of the second embodiment and the third embodiment, the power conversion apparatus 11 can include the first connection switch 61a, the second connection switch 61b, the first diode 91, the second diode 92, and the parallel capacitor 93 as illustrated in Fig. 24. As a second example combination of a modification of the second embodiment and the third embodiment, the power conversion apparatus 11 can include the first connection switch 61a, the second connection switch 61b, the second diode 92, and the parallel capacitor 93 as illustrated in Fig. 25. As a third example combination of another modification of the second embodiment and the third embodiment, the power conversion apparatus 11 can include the first connection switch 61a, the second connection switch 61b, the first diode 91, and the parallel capacitor 93 as illustrated in Fig. 26. As a fourth example combination of a further modification of the second embodiment and the third embodiment, the power conversion apparatus 11 can include the first connection switch 61a, the second connection switch 61b, the first diode 91, and the second diode 92.

The control apparatus 70 can be configured to perform, as the three-phase short-circuit control task, a task of turning on all the upper-arm switches QUH to QWH and a task of turning off all the lower-arm switches QUL to QWL.

In the present disclosure, each of the upper- and lower-arm switches of the switching device unit 31 is not limited to an IGBT. Specifically, another switch, such as an N-channel MOSFET can be used as each of the upper- and lower-arm switches of the switching device unit 31. If an N-channel MOSFET is used as each of the upper- and lower-arm switches of the switching device unit 31, the drain of the N-channel MOSFET serves as a high-side terminal, and the source of the N-channel MOSFET serves as a low-side terminal.

The power conversion system 10 according to the present disclosure is not limited being installed in a vehicle. Specifically, the power conversion system 10 according to the present disclosure can be installed in mobile objects, such as aircrafts or a ships. If the power conversion system 10 is installed in an aircraft, the rotary electric machine 40 can serve as an engine for causing the aircraft to fly. If the power conversion system 10 is installed in a ship, the rotary electric machine 40 can serve as an engine for causing the ship to sail. The power conversion system 10 according to the present disclosure can also be installed in various types of objects other than mobile objects.

The following describes first to eighth characteristic power conversion apparatuses extracted from the above embodiments.

The first characteristic power conversion apparatus (11) includes a rotary electric machine (40) comprised of plural-phase windings (41U, 41V, 41W) connected in star configuration and an inverter (30) including plural switch units, each of which is comprised of an upper-arm switch (QUH, QVH, QWH) and a lower-arm switch (QUL, QVL, QWL) connected in series to each other. The first power conversion apparatus includes a connection path (60) that electrically connects between a neutral point of the plural-phase windings and each of (i) a negative terminal of a first battery (21) connected in series to a second battery (22) and (ii) a positive terminal of the second battery. The first power conversion apparatus includes at least one connection switch (61a, 61b) mounted on the connection path, the at least one connection switch being configured to electrically connect between the neutral point of the plural-phase windings and each of the negative terminal of the first battery and the positive terminal of the second battery while turned on, and cut off an electrical connection between the neutral point of the plural-phase windings and each of the negative terminal of the first battery and the positive terminal of the second battery while turned off. The first power conversion apparatus includes a control unit (70) configured to perform at least one switching control task of the upper- and lower-arm switches while the at least one connection switch is in an on state. The power conversion apparatus includes a determining unit (73, 81) configured to determine whether to execute a short-circuit control task that turns on one of the upper- and lower-arm switches of each switch unit and turns off the other of the upper- and lower-arm switches of the corresponding switch unit. The first power conversion apparatus includes a cutoff unit (86) configured to turn off the at least one connection switch when the determining unit determines to execute the short-circuit control task.

In the second power conversion apparatus, which depends on the first power conversion apparatus, the at least one connection switch includes a first connection switch (61a) and a second connection switch (61b) connected in parallel to each other. The second connection switch has a shorter turnoff time than a turnoff time of the first connection switch, and has a higher on-resistance than an on resistance of the first connection switch.

In the third power conversion apparatus, which depends on the second power conversion apparatus, the control unit is configured to determine whether a driving request for rotatably driving a rotor of the rotary electric machine has occurred, and perform the at least one switching control task while the second connection switch selected from the first and second connection switches is in the on state upon determination that the driving request for rotatably driving the rotor of the rotary electric machine has occurred. The control unit is configured to perform the at least one switching control task while the first connection switch selected from the first and second connection switches is in the on state upon determination that no driving request for rotatably driving the rotor of the rotary electric machine has occurred.

In the fourth power conversion apparatus, which depends on the third power conversion apparatus, the control unit is configured to acquire voltage information on a back electromotive-force voltage to be induced in each of the plural-phase windings, and determine whether the back electromotive-force voltage to be induced in each of the plural-phase windings is lower than or equal to a predetermined allowable level upon determination that the driving request for rotatably driving the rotor of the rotary electric machine has occurred. The control unit is configured to perform the at least one switching control task while the first connection switch selected from the first and second connection switches is in the on state upon determination that the back electromotive-force voltage to be induced in each of the plural-phase windings is lower than or equal to the predetermined allowable level.

The fifth power conversion apparatus, which depends on any of the first to third power conversion apparatuses, further includes at least one diode (91, 92). The at least one connection switch has opposing first and second terminals. The upper-arm switch of each switch unit has a high-side terminal. An anode of the at least one diode is electrically connected to one of the first and second terminals of the at least one connection switch. A cathode of the at least one diode is electrically connected to the high-side terminal of the upper-arm switch of each switch unit.

In the sixth power conversion apparatus, which depends on the fifth power conversion apparatus, the at least one diode comprises a first diode (91) and a second diode (92). The anode of the first diode is electrically connected to a first connection line between the at least one connection switch and the neutral point. The cathode of the first diode is electrically connected to the high-side terminal of the upper-arm switch of each switch unit. The anode of the second diode is electrically connected to a second connection line between the at least one connection switch and each of the negative terminal of the first battery and the positive terminal of the second battery. The cathode of the second diode is electrically connected to the high-side terminal of the upper-arm switch of each switch unit.

In the seventh power conversion apparatus, which depends on the sixth power conversion apparatus, the control unit is configured to cause an alternating current to flow through the connection path while the at least one connection switch is in the on state.

The eighth power conversion apparatus, which depends on any one of the first to seventh power conversion apparatuses, further includes a capacitor (93) connected in parallel to the at least one connection switch.

While illustrative embodiments of the present disclosure have been described herein, the present disclosure is not limited to the embodiments described herein or disclosed configurations, but includes various modifications and adaptations and/or alternations within the equivalent scope of the descriptions. Additionally, various combinations, embodiments, combinations to which only one element or plural elements have been added, or modified embodiments to which only one element or plural elements have been added are within the category or scope of the present disclosure.

## Claims

1. A power conversion apparatus (11) that includes a rotary electric machine (40) comprised of plural-phase windings (41U, 41V, 41W) connected in star configuration and an inverter (30) including plural switch units, each of which is comprised of an upper-arm switch (QUH, QVH, QWH) and a lower-arm switch (QUL, QVL, QWL) connected in series to each other, the power conversion apparatus comprising:
a connection path (60) that electrically connects between a neutral point of the plural-phase windings and each of (i) a negative terminal of a first battery (21) connected in series to a second battery (22) and (ii) a positive terminal of the second battery;
at least one connection switch (61a, 61b) mounted on the connection path,
the at least one connection switch being configured to:
electrically connect between the neutral point of the plural-phase windings and each of the negative terminal of the first battery and the positive terminal of the second battery while turned on; and
cut off an electrical connection between the neutral point of the plural-phase windings and each of the negative terminal of the first battery and the positive terminal of the second battery while turned off;
a control unit (70) configured to perform at least one switching control task of the upper- and lower-arm switches while the at least one connection switch is in an on state;
a determining unit (73, 81) configured to determine whether to execute a short-circuit control task that turns on one of the upper- and lower-arm switches of each switch unit and turns off the other of the upper- and lower-arm switches of the corresponding switch unit; and
a cutoff unit (86) configured to turn off the at least one connection switch when the determining unit determines to execute the short-circuit control task.

2. The power conversion apparatus according to claim 1, wherein:
the at least one connection switch comprises a first connection switch (61a) and a second connection switch (61b) connected in parallel to each other;
the second connection switch has a shorter turnoff time than a turnoff time of the first connection switch; and
the second connection switch has a higher on-resistance than an on resistance of the first connection switch.

3. The power conversion apparatus according to claim 2, wherein:
the control unit is configured to:
determine whether a driving request for rotatably driving a rotor of the rotary electric machine has occurred;
perform the at least one switching control task while the second connection switch selected from the first and second connection switches is in the on state upon determination that the driving request for rotatably driving the rotor of the rotary electric machine has occurred; and
perform the at least one switching control task while the first connection switch selected from the first and second connection switches is in the on state upon determination that no driving request for rotatably driving the rotor of the rotary electric machine has occurred.

4. The power conversion apparatus according to claim 3, wherein:
the control unit is configured to:
acquire voltage information on a back electromotive-force voltage to be induced in each of the plural-phase windings;
determine whether the back electromotive-force voltage to be induced in each of the plural-phase windings is lower than or equal to a predetermined allowable level upon determination that the driving request for rotatably driving the rotor of the rotary electric machine has occurred;
perform the at least one switching control task while the first connection switch selected from the first and second connection switches is in the on state upon determination that the back electromotive-force voltage to be induced in each of the plural-phase windings is lower than or equal to the predetermined allowable level.

5. The power conversion apparatus according to claim 1, further comprising at least one diode (91, 92),
wherein:
the at least one connection switch has opposing first and second terminals;
the upper-arm switch of each switch unit has a high-side terminal;
an anode of the at least one diode is electrically connected to one of the first and second terminals of the at least one connection switch; and
a cathode of the at least one diode is electrically connected to the high-side terminal of the upper-arm switch of each switch unit.

6. The power conversion apparatus according to claim 5, wherein:
the at least one diode comprises a first diode (91) and a second diode (92);
the anode of the first diode is electrically connected to a first connection line between the at least one connection switch and the neutral point;
the cathode of the first diode is electrically connected to the high-side terminal of the upper-arm switch of each switch unit;
the anode of the second diode is electrically connected to a second connection line between the at least one connection switch and each of the negative terminal of the first battery and the positive terminal of the second battery; and
the cathode of the second diode is electrically connected to the high-side terminal of the upper-arm switch of each switch unit.

7. The power conversion apparatus according to claim 6, wherein:
the control unit is configured to cause an alternating current to flow through the connection path while the at least one connection switch is in the on state.

8. The power conversion apparatus according to claim 1, further comprising a capacitor (93) connected in parallel to the at least one connection switch.
